(19) Europäisches Patentamt
European Patent Office
Office européen des brevets

(11) **EP 4 349 904 A1**

(12) **EUROPEAN PATENT APPLICATION**
published in accordance with Art. 153(4) EPC

(43) Date of publication:
**10.04.2024 Bulletin 2024/15**

(21) Application number: **22811041.7**

(22) Date of filing: **31.03.2022**

(51) International Patent Classification (IPC):
***C08L 9/00*** *(2006.01)* ***B60C 1/00*** *(2006.01)*
***C08F 236/10*** *(2006.01)* ***C08L 7/00*** *(2006.01)*
***C08L 9/06*** *(2006.01)* ***C08L 101/00*** *(2006.01)*

(52) Cooperative Patent Classification (CPC):
**B60C 1/00; C08F 236/10; C08L 7/00; C08L 9/00; C08L 9/06; C08L 101/00;** Y02T 10/86

(86) International application number:
**PCT/JP2022/016940**

(87) International publication number:
**WO 2022/249767 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.05.2021 JP 2021090703**

(71) Applicant: **BRIDGESTONE CORPORATION**
**Chuo-ku**
**Tokyo 104-8340 (JP)**

(72) Inventor: **KAWASHIMA Masahiro**
**Tokyo 104-8340 (JP)**

(74) Representative: **Marks & Clerk LLP**
**15 Fetter Lane**
**London EC4A 1BW (GB)**

# (54) RUBBER COMPOSITION FOR TIRE, TREAD RUBBER, AND TIRE

(57) A rubber composition for a tire able to improve tire wet gripping performance is provided. The rubber composition for a tire contains a diene rubber component A, a diene rubber component B, and a resin component C. A difference in SP values between the diene rubber component A and the diene rubber component B is 0.25 $(cal/cm^3)^{1/2}$ or more, and the resin component C has an SP value of 1.40 $(cal/cm^3)^{1/2}$ or less than that of the diene rubber component A. A mass ratio R (resin component C/diene rubber component A) of the resin component C to the diene rubber component A is 0.5 or more, and when loss tangent at frequency F (Hz) as measured by atomic force microscopy is $\tan\delta_F$, a defined Formula (a) is satisfied when $F \geq 100$.

EP 4 349 904 A1

## Description

The present disclosure relates to a rubber composition for a tire, tread rubber, and a tire.

## BACKGROUND

For enhanced vehicle safety, various studies have conventionally been conducted to improve braking performance not only on dry road surfaces but also on wet road surfaces.

For example, Patent Literature (PTL) 1 below describes that the application to tire tread rubber of a rubber composition obtained by mixing thermoplastic resin and filler including silica with a rubber component containing 70 mass% or more natural rubber improves tire braking performance and the like on a wet road surface.

## CITATION LIST

### Patent Literature

PTL 1: WO 2015/079703 A

## SUMMARY

### (Technical Problem)

However, in recent years, there has been demand for further improvement in braking performance of tires on wet road surfaces (hereinafter also referred to as "wet gripping performance").

Therefore, it would be helpful to provide a rubber composition for a tire able to improve tire wet gripping performance, and tread rubber consisting of the rubber composition.

It would also be helpful to provide a tire having excellent wet gripping performance.

### (Solution to Problem)

In order to solve the technical problem described above, primary features of the present disclosure are as follows.

According to the present disclosure, a rubber composition for a tire comprises a diene rubber component A, a diene rubber component B, and a resin component C, wherein

a difference in SP values between the diene rubber component A and the diene rubber component B is 0.25 $(cal/cm^3)^{1/2}$ or more,
a difference in SP values between the resin component C and the diene rubber component A is 1.40 $(cal/cm^3)^{1/2}$ or less,
a mass ratio R of the resin component C to the diene rubber component A (resin component C/diene rubber component A) is 0.5 or more, and
the following Formula (a) is satisfied for F ≥ 100:

$$0.30 \leq -\log_{10} [\tan\delta_F/\{(\log_{10}F) \times R^3\}] \leq 1.80 \qquad \ldots (a)$$

where $\tan\delta_F$ is loss tangent at frequency F (Hz), measured by atomic force microscopy.

Further, tread rubber according to the present disclosure consists of the rubber composition for a tire described above.

Further, a tire according to the present disclosure comprises the tread rubber described above.

### (Advantageous Effect)

The present disclosure provides a rubber composition for a tire able to improve tire wet gripping performance, and tread rubber consisting of the rubber composition.

Further, the present disclosure provides a tire having excellent wet gripping performance.

DETAILED DESCRIPTION

A rubber composition for a tire, tread rubber, and a tire according to the present disclosure are described in detail below, by way of embodiments.

<Rubber composition for a tire>

According to the present disclosure, the rubber composition for a tire contains a diene rubber component A, a diene rubber component B, and a resin component C. In the rubber composition for a tire, a difference in SP values between the diene rubber component A and the diene rubber component B is 0.25 $(cal/cm^3)^{1/2}$ or more, a difference in SP values between the resin component C and the diene rubber component A is 1.40 $(cal/cm^3)^{1/2}$ or less, and a mass ratio R of the resin component C to the diene rubber component A (resin component C/diene rubber component A) is 0.5 or more. Further, in the rubber composition for a tire, the following Formula (a) is satisfied for F ≥ 100:

$$0.30 \leq -\log_{10}\,[\tan\delta_F/\{(\log_{10}F) \times R^3\}] \leq 1.80 \qquad \ldots (a)$$

where $\tan\delta_F$ is loss tangent at frequency F (Hz), measured by atomic force microscopy.

The rubber composition for a tire may include a filler, a styrenic thermoplastic elastomer, and other components as appropriate, to an extent that does not depart from the scope of the present disclosure.

According to the present disclosure, solubility parameter (SP) values of rubber components and resin component are calculated according to the Fedors method.

In the rubber composition for a tire, two diene rubber components that are mutually immiscible (that is, the diene rubber component A and the diene rubber component B) are mixed, and by mixing with the resin component C that has an SP value difference of 1.40 $(cal/cm^3)^{1/2}$ or less from the SP value of at least one of the diene rubber components (that is, the diene rubber component A), optimization of dispersion of each component in the rubber composition is sought, and tire wet gripping performance may be improved.

Further, the inventors have found that for rubber compositions for tires such as described above, a defined calculated value using a loss tangent measured by atomic force microscopy correlates with tire wet gripping performance. Specifically, in the rubber composition for a tire as described above, the inventors found that when the mass ratio R of the resin component C to the diene rubber component A (resin component C/diene rubber component A) is 0.5 or more, then by satisfying the following Formula (a) when

$$F \geq 100:$$

$$0.30 \leq -\log_{10}\,[\tan\delta_F/\{(\log_{10}F) \times R^3\}] \leq 1.80 \qquad \ldots (a)$$

where $\tan\delta_F$ is the loss tangent at frequency F (Hz), measured by atomic force microscopy, then tire wet gripping performance may be significantly improved.

Accordingly, the rubber composition for a tire is able to improve tire wet gripping performance when applied to a tire.

The description above of "satisfying ... Formula (a)" means that Formula (a) is satisfied when measurements are made at all frequencies of 100 Hz or more. However, measuring at all frequencies is not practical, and therefore, in practice, measurements are made at at least 12 frequencies: 100 Hz, 200 Hz, 300 Hz, 500 Hz, 700 Hz, 1,000 Hz, 2,000 Hz, 3,000 Hz, 5,000 Hz, 7,000 Hz, 10,000 Hz, and 20,000 Hz, all of which satisfy Formula (a).

Hereinafter, "$-\log_{10}\,[\tan\delta_F/\{(\log_{10}F) \times R^3\}]$" may also be referred to as "defined calculated value".

Note that the loss tangent $\tan\delta$ measured by atomic force microscopy is a completely different index than the $\tan\delta$ of bulk rubber measured by a viscoelasticity spectrometer. The loss tangent $\tan\delta$ measured by atomic force microscopy, which is a focus of present disclosure, and the defined calculated value using the loss tangent $\tan\delta$ measured by atomic force microscopy, may be used as evaluation indices for wet gripping performance, in particular braking properties.

Here, the measurement of loss tangent using atomic force microscopy may be performed according to a method described in "Nanorheological Mapping of Rubbers by Atomic Force Microscopy", Macromolecules, 46, 1916- 1922 (2013). The type of atomic force microscope is not particularly limited, and a commercially available probe may be used in the atomic force microscopy measurement. A target area for the above measurement is, for example, a two-dimensional space of 10 μm × 10 μm. The above measurement is performed with the surface temperature of the target controlled to be 15 °C. Specifically, the loss tangent may be measured using atomic force microscopy according to a method described in the EXAMPLES section below.

When even one measured frequency condition exists such that the defined calculated value is less than 0.30, the effect of improving wet gripping performance may not be sufficient. When even one measured frequency condition exists such that the defined calculated value exceeds 1.80, the effect of improving wet gripping performance is limited. That is, in the rubber composition for a tire, the defined calculated value of 0.30 or more and 1.80 or less is an optimum range for improving wet gripping performance.

The defined calculated value may be changed in a complex manner by appropriately adjusting, for example, the type of the diene rubber component A, the type of the diene rubber component B, the type of the resin component C, the content of the resin component C, and the mass ratio R of the resin component C to the diene rubber component A. For example, the defined calculated value tends to become greater by increasing the content of the resin component C, by increasing the mass ratio R of the resin component C to the diene rubber component A, by using the resin component C having a smaller SP value difference from the diene rubber component A, and the like.

(Rubber component)

The rubber composition for a tire contains a rubber component, which includes at least the diene rubber component A and the diene rubber component B, and may further include other rubber components.

The difference in SP values between the diene rubber component A and the diene rubber component B is 0.25 $(cal/cm^3)^{1/2}$ or more. When the difference in SP values between the diene rubber component A and the diene rubber component B is less than 0.25 $(cal/cm^3)^{1/2}$, mutual miscibility is more likely, risking deterioration of wet gripping performance. Further, from the viewpoint of effectively improving wet gripping performance, the difference in SP values between the diene rubber component A and the diene rubber component B is preferably 0.30 $(cal/cm^3)^{1/2}$ or more, more preferably 0.35 $(cal/cm^3)^{1/2}$ or more, and even more preferably 0.40 $(cal/cm^3)^{1/2}$ or more.

The rubber composition may contain two or more diene rubber components, wherein the difference in SP values between the two or more diene rubber components is 0.25 $(cal/cm^3)^{1/2}$ or more, the difference in SP values with the resin component C is 1.40 $(cal/cm^3)^{1/2}$ or less, and the mass ratio R with the resin component C is 0.5 or more. In such a case, among the two or more diene rubber components, the diene rubber component having the lowest SP value is considered to be the diene rubber component A, and the diene rubber component having the highest SP value is considered to be the diene rubber component B.

- Diene rubber component A -

Rubber types of the diene rubber component A include, for example, natural rubber (NR), isoprene rubber (IR), butadiene rubber (BR), styrene-butadiene rubber (SBR), styrene-isoprene-butadiene rubber (SIBR), ethylene propylene diene monomer (EPDM) rubber, chloroprene rubber (CR), acrylonitrile butadiene rubber (NBR), and the like. The diene rubber component A may be a modified diene rubber modified with any modifier, and may be an unmodified diene rubber. Among these, the diene rubber component A is preferably (modified or unmodified) natural rubber or isoprene rubber from the viewpoint of effectively improving wet gripping performance.

The content of the diene rubber component A is preferably 1 part by mass to 80 parts by mass, and more preferably 1 part by mass to 40 parts by mass, per 100 parts by mass of the rubber component. When the content of the diene rubber component A is 1 part by mass to 80 parts by mass per 100 parts by mass of the rubber component, wet gripping performance of a tire to which the rubber composition is applied may be further improved. Further, when the content of the diene rubber component A is 1 part by mass to 40 parts by mass per 100 parts by mass of the rubber component, wet gripping performance of a tire to which the rubber composition is applied may be further improved. Further, from the viewpoint of effectively and efficiently improving wet gripping performance of the tire, the content of the diene rubber component A is preferably 10 parts by mass or more and 50 parts by mass or less per 100 parts by mass of the rubber component.

The diene rubber component A preferably has a lower SP value than the diene rubber component B. Accordingly, wet gripping performance may be more effectively improved.

- Diene rubber component B -

Rubber types of the diene rubber component B include, for example, natural rubber (NR), isoprene rubber (IR), butadiene rubber (BR), styrene-butadiene rubber (SBR), styrene-isoprene-butadiene rubber (SIBR), ethylene propylene diene monomer (EPDM) rubber, chloroprene rubber (CR), acrylonitrile butadiene rubber (NBR), and the like. The diene rubber component B may be a modified diene rubber modified with any modifier, and may be an unmodified diene rubber. Among these, the diene rubber component B is preferably (modified or unmodified) butadiene rubber or styrene-butadiene rubber from the viewpoint of effectively improving wet gripping performance.

The diene rubber component B preferably has a glass transition temperature less than -40 °C and more than

-90 °C. When the glass transition temperature of the diene rubber component B is less than -40 °C, fuel efficiency and wear resistance performance of a tire to which the rubber composition is applied may be improved. Further, a diene rubber component having a glass transition temperature more than -90 °C is easy to synthesize. From the same perspective, the glass transition temperature of the diene rubber component B is more preferably -45 °C or less, and even more preferably -50 °C or less.

The glass transition temperature is defined as a peak top (inflection point) of a differential scanning calorimetry (DSC) differential curve obtained by recording a DSC curve during temperature increase in a defined temperature range. Specifically, the glass transition temperature is measured by a method described in the EXAMPLES section below.

The content of the diene rubber component B per 100 parts by mass of the rubber component is preferably 20 parts by mass to 99 parts by mass, more preferably 30 parts by mass to 99 parts by mass, even more preferably 40 parts by mass to 99 parts by mass, even more preferably 50 parts by mass to 99 parts by mass, and, in particular, even more preferably 60 parts by mass to 99 parts by mass. When the content of diene rubber component B is 60 parts by mass to 99 parts by mass per 100 parts by mass of the rubber component, wet gripping performance of a tire to which the rubber composition for a tire is applied may be further improved, and fuel efficiency may be further improved. Further, from the viewpoint of effectively and efficiently improving wet gripping performance of the tire, the content of the diene rubber component B is preferably 50 parts by mass or more and 90 parts by mass or less per 100 parts by mass of the rubber component.

When the diene rubber component B is styrene-butadiene rubber, bound styrene content in the styrene-butadiene rubber is preferably less than 15 mass%. The bound styrene content in the styrene-butadiene rubber means the proportion of styrene units included in the styrene-butadiene rubber. When the bound styrene content in the styrene-butadiene rubber is less than 15 mass%, the glass transition temperature tends to be low. From the same perspective, the bound styrene content in the styrene-butadiene rubber is preferably 14 mass% or less, more preferably 13 mass% or less, and even more preferably 12 mass% or less. Further, from the perspective of wear resistance performance of a tire to which the rubber composition is applied, the bound styrene content in the styrene-butadiene rubber is preferably 3 mass% or more, and more preferably 4 mass% or more.

The bound styrene content in the styrene-butadiene rubber may be adjusted by the amount of monomer used for polymerization of the styrene-butadiene rubber, degree of polymerization, and the like.

When the diene rubber component B is styrene-butadiene rubber, the styrene-butadiene rubber is preferably modified by a modifier having a functional group including a nitrogen atom and an alkoxy group. When the styrene-butadiene rubber is modified by a modifier having a functional group including a nitrogen atom and an alkoxy group, wet gripping performance of a tire to which the rubber composition is applied is further improved, and a balance between fuel efficiency and wear resistance performance is also improved, in particular improving fuel efficiency and wear resistance performance.

The modifier having a functional group including a nitrogen atom and an alkoxy group is a generic term for a modifier having at least one functional group including a nitrogen atom and at least one alkoxy group.

The functional group including a nitrogen atom is preferably selected from the following.

A $C_1$-$C_{30}$ monovalent hydrocarbon group including a straight chain, branched, alicyclic, or aromatic ring, and including a functional group selected from the group consisting of a primary amino group, a primary amino group protected by a hydrolysable protective group, an onium salt residual group of a primary amine, an isocyanate group, a thioisocyanate group, an imine group, an imine residual group, an amide group, a secondary amino group protected by a hydrolysable protective group, a cyclic secondary amino group, an onium salt residual group of a cyclic secondary amine, an acyclic secondary amino group, an onium salt residual group of an acyclic secondary amine, an isocyanuric acid triester residual group, a cyclic tertiary amino group, an acyclic tertiary amino group, a nitrile group, a pyridine residual group, an onium salt residual group of a cyclic tertiary amine, and an onium salt residual group of an acyclic tertiary amine; or a $C_1$-$C_{30}$ monovalent hydrocarbon group having including a straight chain, branched chain, alicyclic ring, or aromatic ring that may include at least one hetero atom selected from oxygen, sulfur, or phosphorus.

-- First preferred embodiment of diene rubber component B --

The diene rubber component B is preferably styrene-butadiene rubber modified with an aminoalkoxysilane compound. From the viewpoint of having a high affinity for fillers, the diene rubber component B is more preferably styrene-butadiene rubber having an end modified with an aminoalkoxysilane compound. When the end of styrene-butadiene rubber is modified with an aminoalkoxysilane compound, interaction between the modified styrene-butadiene rubber and filler (particularly silica) is particularly large.

The modified site of the styrene-butadiene rubber may be the molecular terminal as described above, or may be the main chain.

Styrene-butadiene rubber having a modified molecular end may be produced by reacting various modifiers with the end of a styrene-butadiene copolymer having an active end according to, for example, a method described in

WO 2003/046020 and JP 2007-217562 A.

According to a preferred embodiment, a styrene-butadiene rubber having a modified molecular end is produced according to the method described in WO2003/046020 and JP2007-217562A by reacting an end of a styrene-butadiene copolymer having cis-1,4 bond content of 75 % or more with an aminoalkoxysilane compound, followed by stabilization by reacting with a polyhydric alcohol carboxylic acid partial ester.

The polyhydric alcohol carboxylic acid partial ester is an ester of polyhydric alcohol and carboxylic acid, and a partial ester having one or more hydroxyl groups. Specifically, an ester of a sugar having four or more carbons or a modified sugar and fatty acid are preferably used. The ester is more preferably (1) a polyhydric alcohol fatty acid partial ester, in particular a partial ester (whether monoester, diester, or triester) of $C_{10}$-$C_{20}$ saturated or unsaturated higher fatty acid and polyhydric alcohol, (2) an ester compound in which one to three partial esters of a polyvalent carboxylic acid and a higher alcohol are bound to a polyhydric alcohol, and the like.

A polyhydric alcohol used as a raw material for a partial ester is preferably $C_5$-$C_6$ sugar having at least three hydroxyl groups (hydrogenated or not), glycol, polyhydroxy compound, and the like. Further, a raw material fatty acid is preferably a $C_{10}$-$C_{20}$ saturated or unsaturated fatty acid, such as stearic acid, lauric acid, or palmitic acid.

Among polyhydric alcohol fatty acid partial esters, sorbitan fatty acid esters are preferable, specifically sorbitan monolaurate, sorbitan monopalmitate, sorbitan monostearate, sorbitan tristearate, sorbitan monooleate, sorbitan trioleate, and the like.

The above aminoalkoxysilane compounds are not particularly limited, but aminoalkoxysilane compounds represented by the following general formula (i) are preferable.

$$R^{11}{}_{a}\text{-Si-}(OR^{12})_{4-a} \qquad \dots \text{(i)}$$

In the general formula (i), $R^{11}$ and $R^{12}$ each independently represent a $C_1$-$C_{20}$ monovalent aliphatic hydrocarbon group or a $C_6$-$C_{18}$ monovalent aromatic hydrocarbon group, where at least one of $R^{11}$ or $R^{12}$ is substituted with an amino group; a is an integer from 0 to 2; when a plurality of $OR^{12}$ are present, each $OR^{12}$ may be identical or different from each other; and the molecule contains no active protons.

As the above aminoalkoxysilane compound, an aminoalkoxysilane compound represented by the following general formula (ii) is also preferable.

[Chem. 1]

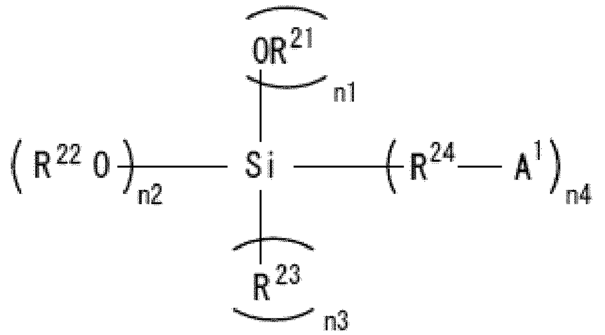

・・・・( ii )

In the general formula (ii), n1 + n2 + n3 + n4 = 4 (where n2 is an integer from 1 to 4 and n1, n3, and n4 are integers from 0 to 3).

$A^1$ is at least one functional group selected from a group consisting of a saturated cyclic tertiary amine compound residual group, an unsaturated cyclic tertiary amine compound residual group, a ketimine residual group, a nitrile group, a (thio)isocyanate group, an isocyanurate trihydrocarbyl ester group, a nitrile group, a pyridine group, a (thio)ketone group, an amide group, and a primary or secondary amino group having a hydrolysable group. When n4 is 2 or more, $A^1$ may be identical or different, and $A^1$ may be a divalent group bound to Si to form a cyclic structure.

$R^{21}$ is a $C_1$-$C_{20}$ monovalent aliphatic or alicyclic hydrocarbon group or a $C_6$-$C_{18}$ monovalent aromatic hydrocarbon group, and may be identical or different when n1 is 2 or more.

$R^{22}$ is a $C_1$-$C_{20}$ monovalent aliphatic or alicyclic hydrocarbon group or a $C_6$-$C_{18}$ monovalent aromatic hydrocarbon group, either of which may contain nitrogen atoms and/or silicon atoms. When n2 is 2 or more, $R^{22}$ may be identical or different from each other, and together may form a ring.

$R^{23}$ is a $C_1$-$C_{20}$ monovalent aliphatic or alicyclic hydrocarbon group, a $C_6$-$C_{18}$ monovalent aromatic hydrocarbon

group, or a halogen atom, and may be identical or different when n3 is 2 or more.

$R^{24}$ is a $C_1$-$C_{20}$ divalent aliphatic or alicyclic hydrocarbon group or a $C_6$-$C_{18}$ divalent aromatic hydrocarbon group, and may be identical or different when n4 is 2 or more.

As a hydrolysable group in the primary or secondary amino group having a hydrolysable group, a trimethylsilyl group or a tert-butyldimethylsilyl group is preferable, and a trimethylsilyl group is particularly preferable.

The aminoalkoxysilane compound represented in the general formula (ii) is preferably an aminoalkoxysilane compound represented by the following general formula (iii).

[Chem. 2]

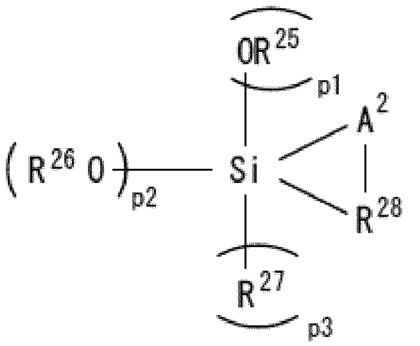

· · · · (iii)

In the general formula (iii), p1 + p2 + p3 = 2 (where p2 is an integer 1 or 2 and p1 and p3 are integers 0 or 1).

$A^2$ is NRa (where Ra is a monovalent hydrocarbon group, hydrolysable group, or nitrogen-containing organic group).

$R^{25}$ is a $C_1$-$C_{20}$ monovalent aliphatic or alicyclic hydrocarbon group or a $C_6$-$C_{18}$ monovalent aromatic hydrocarbon group.

$R^{26}$ is a $C_1$-$C_{20}$ monovalent aliphatic or alicyclic hydrocarbon group, a $C_6$-$C_{18}$ monovalent aromatic hydrocarbon group, or a nitrogen-containing organic group, any of which may contain nitrogen and/or silicon atoms. When p2 is 2, $R^{26}$ may be identical or different from each other, and together may form a ring.

$R^{27}$ is a $C_1$-$C_{20}$ monovalent aliphatic or alicyclic hydrocarbon group, a $C_6$-$C_{18}$ monovalent aromatic hydrocarbon group, or a halogen atom.

$R^{28}$ is a $C_1$-$C_{20}$ divalent aliphatic or alicyclic hydrocarbon group or a $C_6$-$C_{18}$ divalent aromatic hydrocarbon group.

As the hydrolysable group, a trimethylsilyl group or a tert-butyldimethylsilyl group is preferable, and a trimethylsilyl group is particularly preferable.

The aminoalkoxysilane compound represented by the general formula (ii) being an aminoalkoxysilane compound represented by the following general formula (iv) or (v) is also preferable.

[Chem. 3]

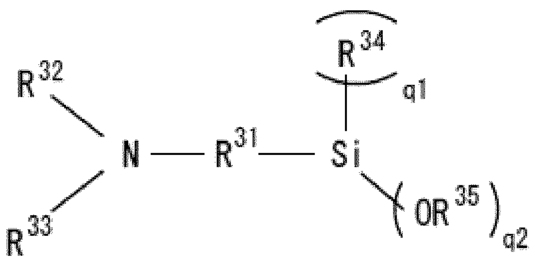

· · · · (iv)

In the general formula (iv), q1 + q2 = 3 (where q1 is an integer from 0 to 2 and q2 is an integer from 1 to 3).

$R^{31}$ is a $C_1$-$C_{20}$ divalent aliphatic or alicyclic hydrocarbon group or a $C_6$-$C_{18}$ divalent aromatic hydrocarbon group.

$R^{12}$ and $R^{33}$ are each independently a hydrolysable group, a $C_1$-$C_{20}$ monovalent aliphatic or alicyclic hydrocarbon group, or a $C_6$-$C_{18}$ monovalent aromatic hydrocarbon group.

$R^{34}$ is a $C_1$-$C_{20}$ monovalent aliphatic or alicyclic hydrocarbon group or a $C_6$-$C_{18}$ monovalent aromatic hydrocarbon group, and may be identical or different when q1 is 2.

$R^{35}$ is a $C_1$-$C_{20}$ monovalent aliphatic or alicyclic hydrocarbon group or a $C_6$-$C_{18}$ monovalent aromatic hydro-

carbon group, and may be identical or different when q2 is 2 or more.

[Chem. 4]

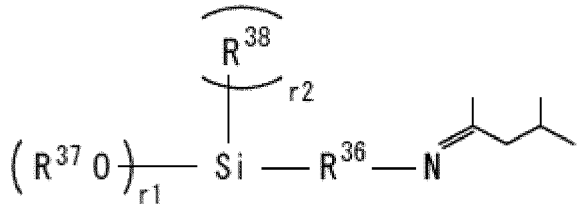

• • • • (v)

In the general formula (v), r1 + r2 = 3 (where r1 is an integer from 1 to 3 and r2 is an integer from 0 to 2).

$R^{36}$ is a $C_1$-$C_{20}$ divalent aliphatic or alicyclic hydrocarbon group or a $C_6$-$C_{18}$ divalent aromatic hydrocarbon group.

$R^{37}$ is a dimethylaminomethyl group, a dimethylaminoethyl group, a diethylaminomethyl group, a diethylaminoethyl group, a methylsilyl(methyl)aminomethyl group, a methylsilyl(methyl)aminoethyl group, a methylsilyl(ethyl)aminomethyl group, a methylsilyl(ethyl)aminoethyl group, a dimethylsilylaminomethyl group, a dimethylsilylaminoethyl group, a $C_1$-$C_{20}$ monovalent aliphatic or alicyclic hydrocarbon group, or a $C_6$-$C_{18}$ monovalent aromatic hydrocarbon group, and may be identical or different when r1 is 2 or more.

$R^{38}$ is a $C_1$-$C_{20}$ hydrocarbyloxy group, a $C_1$-$C_{20}$ monovalent aliphatic or alicyclic hydrocarbon group, or a $C_6$-$C_{18}$ monovalent aromatic hydrocarbon group, and may be identical or different when r2 is 2.

A specific example of an aminoalkoxysilane compound represented by the general formula (v) is N-(1,3-dimethylbutylidene)-3-triethoxysilyl-1-propanamine.

The aminoalkoxysilane compound represented by the general formula (ii) being an aminoalkoxysilane compound represented by the following general formula (vi) or (vii) is also preferable.

[Chem. 5]

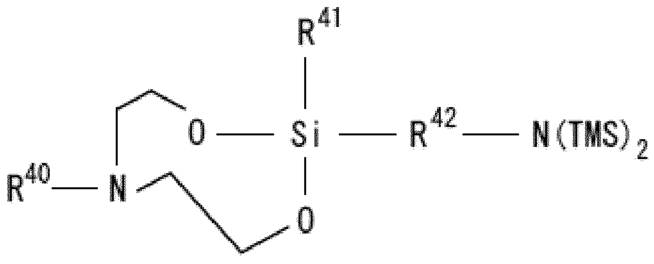

• • • • (vi)

In the general formula (vi), $R^{40}$ is a trimethylsilyl group, a $C_1$-$C_{20}$ monovalent aliphatic or alicyclic hydrocarbon group or a $C_6$-$C_{18}$ monovalent aromatic hydrocarbon group.

$R^{41}$ is a $C_1$-$C_{20}$ hydrocarbyloxy group, a $C_1$-$C_{20}$ monovalent aliphatic or alicyclic hydrocarbon group, or a $C_6$-$C_{18}$ aromatic hydrocarbon group.

$R^{42}$ is a $C_1$-$C_{20}$ divalent aliphatic or alicyclic hydrocarbon group or a $C_6$-$C_{18}$ divalent aromatic hydrocarbon group.

Here, TMS represents a trimethylsilyl group (the same applies hereinafter).

[Chem. 6]

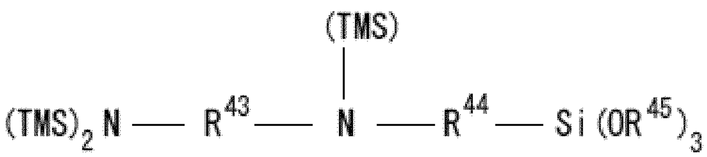

• • • • (vii)

In the general formula (vii), $R^{43}$ and $R^{44}$ are each independently a $C_1$-$C_{20}$ divalent aliphatic or alicyclic hydrocarbon group or a $C_6$-$C_{18}$ divalent aromatic hydrocarbon group.

$R^{45}$ is a $C_1$-$C_{20}$ monovalent aliphatic or alicyclic hydrocarbon group or a $C_6$-$C_{18}$ monovalent aromatic hydro-

carbon group, and each $R^{45}$ may be identical or different.

The aminoalkoxysilane compound represented by the general formula (ii) being an aminoalkoxysilane compound represented by the following general formula (viii) or (ix) is also preferable.

[Chem. 7]

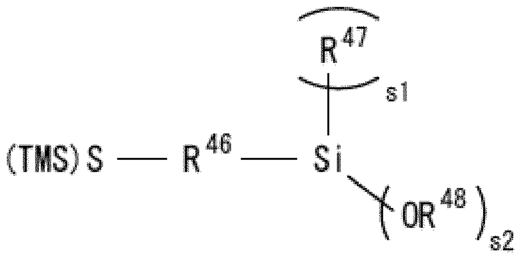

· · · · (viii)

In the general formula (viii), s1 + s2 is 3 (where s1 is an integer from 0 to 2 and s2 is an integer from 1 to 3).

$R^{46}$ is a $C_1$-$C_{20}$ divalent aliphatic or alicyclic hydrocarbon group or a $C_6$-$C_{18}$ divalent aromatic hydrocarbon group.

$R^{47}$ and $R^{48}$ are each independently a $C_1$-$C_{20}$ monovalent aliphatic or alicyclic hydrocarbon group or a $C_6$-$C_{18}$ monovalent aromatic hydrocarbon group. Each of a plurality of $R^{47}$ and each of a plurality of $R^{48}$ may be identical or different.

[Chem. 8]

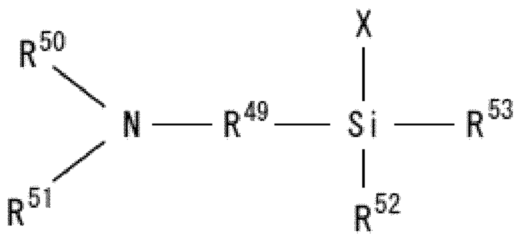

· · · · (ix)

In the general formula (ix), X is a halogen atom.

$R^{49}$ is a $C_1$-$C_{20}$ divalent aliphatic or alicyclic hydrocarbon group or a $C_6$-$C_{18}$ divalent aromatic hydrocarbon group.

$R^{50}$ and $R^{51}$ are each independently a hydrolysable group, a $C_1$-$C_{20}$ monovalent aliphatic or alicyclic hydrocarbon group, or a $C_6$-$C_{18}$ monovalent aromatic hydrocarbon group, or $R^{50}$ and $R^{51}$ bind to form a divalent organic group.

$R^{52}$ and $R^{53}$ are each independently a halogen atom, a hydrocarbyloxy group, a $C_1$-$C_{20}$ monovalent aliphatic or alicyclic hydrocarbon group, or a $C_6$-$C_{18}$ monovalent aromatic hydrocarbon group.

As $R^{50}$ and $R^{51}$, a hydrolysable group is preferable. As the hydrolysable group, a trimethylsilyl group or a tert-butyldimethylsilyl group is preferable, and a trimethylsilyl group is particularly preferable.

The aminoalkoxysilane compound represented by the general formula (ii) being an aminoalkoxysilane compound represented by the following general formula (x), (xi), (xii) or (xiii) is also preferable.

[Chem. 9]

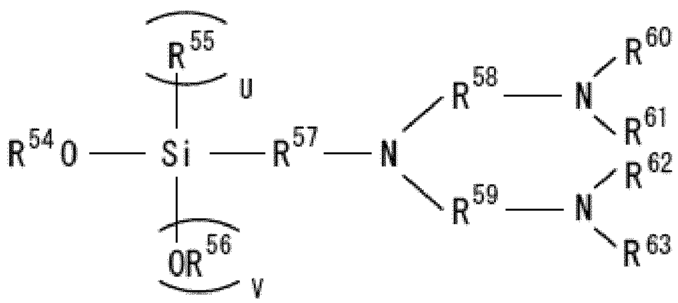

· · · · (x)

[Chem. 10]

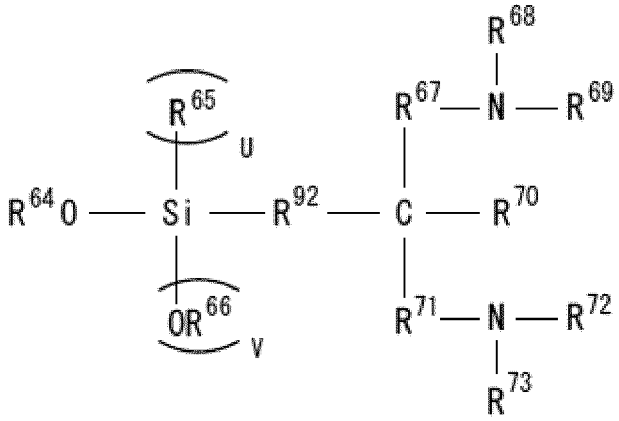

···· (xi)

[Chem. 11]

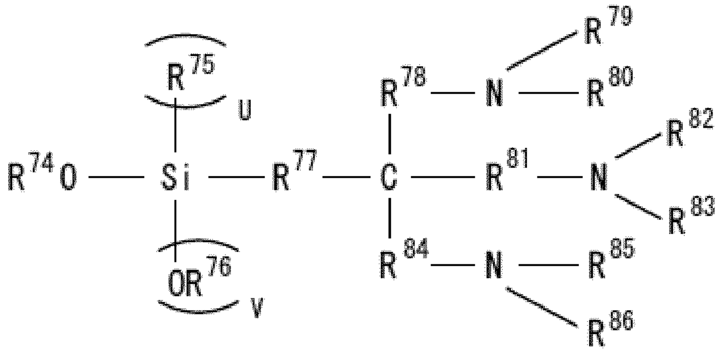

···· (xii)

[Chem. 12]

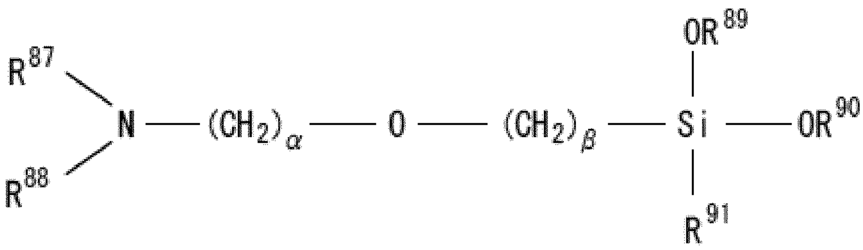

···· (xiii)

In each of the general formulas (x) to (xiii), the symbols U and V are integers from 0 to 2 that satisfy U + V = 2.

$R^{54}$ to $R^{92}$ in the general formulas (x) to (xiii) may be identical or different, and are each a $C_1$-$C_{20}$ monovalent or divalent aliphatic or alicyclic hydrocarbon group, or a $C_6$-$C_{18}$ monovalent or divalent aromatic hydrocarbon group.

In the general formula (xiii), each of $\alpha$ and $\beta$ is an integer from 0 to 5.

Among the compounds satisfying the general formulas (x), (xi) and (xii), in particular, N1,N1,N7,N7-tetramethyl-4-((trimethoxysilyl)methyl)heptane-1,7-diamine, 2-((hexyl-dimethoxysilyl)methyl)-N1,N1,N3,N3-2-pentamethylpropane-1,3-di amine, N 1-(3 -(dim ethyl amino)propyl)-N3,N3 -dimethyl-N 1-(3 -(trim ethoxy silyl)propy l)propane-1,3-diamine, and 4-(3-(dimethylamino)propyl)-N1,N1,N7,N7-tetramethyl-4-((trimethoxysilyl) methyl)heptane-1,7-diamine are preferable.

Further, among the compounds satisfying the general formula (xiii), in particular, N,N-dimethyl-2-(3-(dimethoxymethylsilyl)propoxy)ethanamine, N,N -bis(trimethylsilyl)-2-(3-(trimethoxysilyl)propoxy)ethanamine, N,N-dimethyl-2-(3-(trimethoxysilyl)propoxy)ethanamine, and N,N-dimethyl-3-(3-(trimethoxysilyl)propoxy)propan-1-amine are preferable.

-- Second preferred embodiment of diene rubber component B --

The diene rubber component B being a styrene-butadiene rubber modified by a coupling agent represented by the following general formula (I) is also preferable. In this case, fuel efficiency and wear resistance performance of a tire to which the rubber composition is applied may be improved.

[Chem. 13]

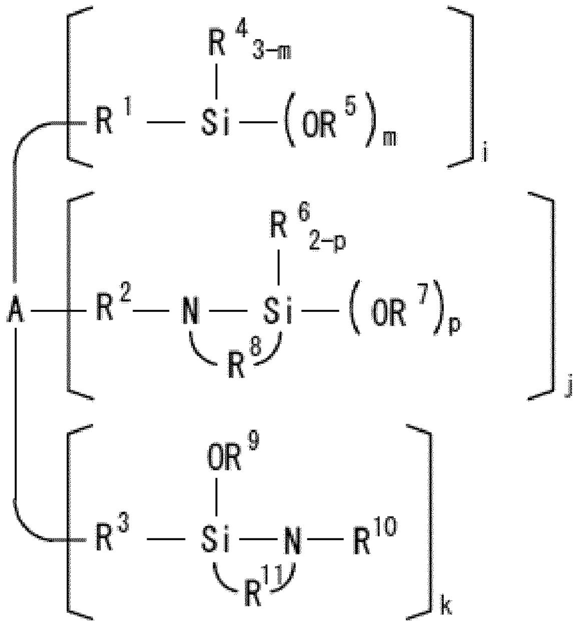

···· (I)

In the general formula (I), $R^1$, $R^2$, and $R^3$ each independently represent a single bond or a $C_1$-$C_{20}$ alkylene group.

$R^4$, $R^5$, $R^6$, $R^7$, and $R^9$ each independently represent a $C_1$-$C_{20}$ alkyl group.

$R^8$ and $R^{11}$ each independently represent a $C_1$-$C_{20}$ alkylene group.

$R^{10}$ represents a $C_1$-$C_{20}$ alkyl or trialkylsilyl group.

m represents an integer from 1 to 3, and p represents 1 or 2.

When present in a plurality, each of any of $R^1$ to $R^{11}$, m, and p are independent.

i, j, and k each independently represent an integer from 0 to 6. However, (i + j + k) is an integer from 3 to 10.

A represents a $C_1$-$C_{20}$ hydrocarbon group or organic group containing at least one atom selected from the group consisting of oxygen, nitrogen, silicon, sulfur, and phosphorus, and not containing active hydrogen.

In the general formula (I), the hydrocarbon group represented by A encompasses saturated, unsaturated, aliphatic, and aromatic hydrocarbon groups. The organic group not containing active hydrogen is, for example, an organic group not containing a functional group having active hydrogen, such as a hydroxyl group (-OH), a secondary amino group (>NH), a primary amino group ($-NH_2$), a sulfhydryl group (-SH), and the like.

The styrene-butadiene rubber modified by the coupling agent represented by the general formula (I) preferably contains 0.25 mass% to 30 mass% of modified styrene-butadiene rubber having a molecular weight of $200 \times 10^4$ to $500 \times 10^4$, relative to the total amount of the modified styrene-butadiene rubber, with a contracting factor (g') of less than 0.64, and a weight average molecular weight (Mw) of $20 \times 10^4$ to $300 \times 10^4$.

Typically, a branched polymer tends to have smaller molecular size than a linear polymer with the same absolute molecular weight. The contracting factor (g') is an index of the ratio of the size of the molecule to a linear polymer assumed to have the same absolute molecular weight. That is, the contracting factor (g') tends to be less when the branching degree of the polymer is greater. According to the present embodiment, intrinsic viscosity is used as an index of the molecular size, and the linear polymer is assumed to be in accordance with a relational expression of intrinsic viscosity $[\eta] = -3.883 M^{0.771}$. The contracting factor (g') of the modified styrene-butadiene rubber at each absolute molecular weight is calculated, and an average value of contracting factors (g') when the absolute molecular weight is $100 \times 10^4$ to $200 \times 10^4$ is taken to be the contracting factor (g') of the modified styrene-butadiene rubber. Herein, a "branch" is formed as a result of another polymer directly or indirectly binding to one polymer. Further, "branching degree"

is the number of polymers directly or indirectly binding to each other for one branch. For example, in the case where the five styrene-butadiene copolymer chains described below indirectly bind to each other through the coupling residual group described below, the branching degree is 5. A coupling residual group is a structural unit of modified styrene-butadiene rubber that is bound to the styrene-butadiene copolymer chain, and for example, is a coupling agent-derived structural unit obtained by reacting the styrene-butadiene copolymer described below with a coupling agent. Further, a styrene-butadiene copolymer chain is a structural unit of modified styrene-butadiene rubber and, for example, is a styrene-butadiene copolymer-derived structural unit obtained by reacting the styrene-butadiene copolymer described below with a coupling agent.

The contracting factor (g') is preferably less than 0.64, more preferably 0.63 or less, even more preferably 0.60 or less, even more preferably 0.59 or less, and even more preferably 0.57 or less. No lower limit is placed on the contracting factor (g'). The contracting factor (g') may be a detection limit or less. The contracting factor (g') is preferably 0.30 or more, more preferably 0.33 or more, even more preferably 0.35 or more, and even more preferably 0.45 or more. The use of the modified styrene-butadiene rubber having the contracting factor (g') in this range improves processability of the rubber composition.

The contracting factor (g') tends to depend on the branching degree and therefore, for example, the contracting factor (g') may be controlled using the branching degree as an index. Specifically, when the modified styrene-butadiene rubber has a branching degree of 6, the contracting factor (g') tends to be 0.59 or more and 0.63 or less. When the modified styrene-butadiene rubber has a branching degree of 8, the contracting factor (g') tends to be 0.45 or more and 0.59 or less.

The styrene-butadiene rubber modified by the coupling agent represented by the general formula (I) is preferably branched with a branching degree of 5 or more. Further, the modified styrene-butadiene rubber more preferably has one or more coupling residual groups and styrene-butadiene copolymer chains bound to the coupling residual groups, where the branching includes a branch in which five or more of the styrene-butadiene copolymer chains are bound to one coupling residual group. By determining the structure of the modified styrene-butadiene rubber so that the branching degree is 5 or more and the branching includes a branch in which five or more the styrene-butadiene copolymer chains are bound to one coupling residual group, the contracting factor (g') may be more reliably limited to less than 0.64. The number of styrene-butadiene copolymer chains bound to one coupling residual group may be confirmed from the value of the contracting factor (g').

Further, the modified styrene-butadiene rubber is more preferably branched with a branching degree of 6 or more. Further, the modified styrene-butadiene rubber more preferably has one or more coupling residual groups and styrene-butadiene copolymer chains bound to the coupling residual groups, where the branching includes a branch in which six or more of the styrene-butadiene copolymer chains are bound to one coupling residual group. By determining the structure of the modified styrene-butadiene rubber so that the branching degree is 6 or more and the branching includes a branch in which six or more styrene-butadiene copolymer chains are bound to one coupling residual group, the contracting factor (g') may be limited to 0.63 or less.

Further, the modified styrene-butadiene rubber is even more preferably branched with a branching degree of 7 or more, and even more preferably with a branching degree of 8 or more. No upper limit is placed on the branching degree. The branching degree is preferably 18 or less. Further, the modified styrene-butadiene rubber even more preferably has one or more coupling residual groups and styrene-butadiene copolymer chains bound to the coupling residual groups, where the branching includes a branch in which seven or more of the styrene-butadiene copolymer chains are bound to one coupling residual group. Even more preferably, the branching includes a branch in which eight or more of the styrene-butadiene copolymer chains are bound to one coupling residual group. By determining the structure of the modified styrene-butadiene rubber so that the branching degree is 8 or more and the branching includes a branch in which eight or more styrene-butadiene copolymer chains are bound to one coupling residual group, the contracting factor (g') may be limited to 0.59 or less.

At least one end of the styrene-butadiene copolymer chain is preferably bound to a silicon atom of a coupling residual group. The ends of a plurality of the styrene-butadiene copolymer chains may be bound to one silicon atom. Further, the end of a styrene-butadiene copolymer chain and a $C_1$-$C_{20}$ alkoxy group or hydroxyl group may be bound to one silicon atom, as a result of which the one silicon atom forms a $C_1$-$C_{20}$ alkoxysilyl group or silanol group.

The modified styrene-butadiene rubber may be oil-extended rubber to which extender oil has been added. The modified styrene-butadiene rubber may be non-oil-extended or oil-extended. From the viewpoint of wear resistance performance, the Mooney viscosity measured at 100 °C is preferably 20 or more and 100 or less, and more preferably 30 or more and 80 or less.

The weight average molecular weight (Mw) of the modified styrene-butadiene rubber is preferably $20 \times 10^4$ or more and $300 \times 10^4$ or less, more preferably $50 \times 10^4$ or more, even more preferably $64 \times 10^4$ or more, and even more preferably $80 \times 10^4$ or more. Further, the weight average molecular weight is preferably $250 \times 10^4$ or less, more preferably $180 \times 10^4$ or less, and even more preferably $150 \times 10^4$ or less. When the weight average molecular weight is $20 \times 10^4$ or more, low loss property and wear resistance of the rubber composition may be sufficiently improved.

Further, when the weight average molecular weight is 300 × $10^4$ or less, processability of the rubber composition is improved.

The modified styrene-butadiene rubber preferably contains 0.25 mass% or more and 30 mass% or less of modified styrene-butadiene rubber having a molecular weight of 200 × $10^4$ or more and 500 × $10^4$ or less (hereinafter also referred to as "specific high molecular weight component"), relative to the total amount (100 mass%) of the modified styrene-butadiene rubber. When the content of the specific high molecular weight component is 0.25 mass% or more and 30 mass% or less, low loss property and wear resistance performance of the rubber composition may be sufficiently improved. The content of the specific high molecular weight component in the modified styrene-butadiene rubber is preferably 1.0 mass% or more, more preferably 1.4 mass% or more, even more preferably 1.75 mass% or more, even more preferably 2.0 mass% or more, even more preferably 2.15 mass% or more, and even more preferably 2.5 mass% or more. The content of the specific high molecular weight component in the modified styrene-butadiene rubber is preferably 28 mass% or less, more preferably 25 mass% or less, even more preferably 20 mass% or less, and even more preferably 18 mass% or less.

Hereinafter, the "molecular weight" of the rubber component is a standard polystyrene-equivalent molecular weight obtained by gel permeation chromatography (GPC). To obtain the modified styrene-butadiene rubber having the content of the specific high molecular weight component in such a range, reaction conditions in the polymerization and reaction described below are preferably controlled. For example, in the polymerization, a use amount of an organomonolithium compound described below as a polymerization initiator may be adjusted. Further, in the polymerization, a method using a residence time distribution may be used, that is, a time distribution of growth reaction may be widened, in both continuous mode polymerization and batch mode polymerization.

The molecular weight distribution (Mw/Mn) of the modified styrene-butadiene rubber, expressed as the ratio of weight average molecular weight (Mw) to number average molecular weight (Mn), is preferably 1.6 or more and 3.0 or less. When the molecular weight distribution of the modified styrene-butadiene rubber is in this range, the rubber composition has good processability.

A method of producing modified styrene-butadiene rubber is not particularly limited. The method preferably includes polymerization using an organic monolithium compound as a polymerization initiator, copolymerizing butadiene and styrene to obtain styrene-butadiene copolymer, and reaction of the active ends of the styrene-butadiene copolymer with a pentafunctional or more functional reactive compound (hereinafter also referred to as "coupling agent").

The polymerization is preferably polymerization through growth reaction by living anionic polymerization reaction. Thus, a styrene-butadiene copolymer having an active end may be obtained, and therefore a modified styrene-butadiene rubber having a high modification rate may be obtained.

The styrene-butadiene copolymer is obtainable by copolymerizing 1,3-butadiene and styrene.

The use amount of the organomonolithium compound as a polymerization initiator is preferably determined depending on the target molecular weight of the styrene-butadiene copolymer or the modified styrene-butadiene rubber. The ratio of the use amount of a monomer such as 1,3-butadiene, styrene, and the like to the use amount of the polymerization initiator relates to the polymerization degree, that is, the number average molecular weight and/or the weight average molecular weight. Accordingly, in order to increase the molecular weight, adjustment may be made to reduce the amount of the polymerization initiator, and in order to reduce the molecular weight, adjustment may be made to increase the amount of the polymerization initiator.

The organomonolithium compound is preferably an alkyllithium compound from the viewpoint of industrial availability and controllability of polymerization reaction. Thus, a styrene-butadiene copolymer having an alkyl group at a polymerization initiation end is obtainable. Examples of the alkyllithium compound include n-butyllithium, sec-butyllithium, tert-butyllithium, n-hexyllithium, benzyllithium, phenyllithium, and stilbenelithium. From the viewpoint of industrial availability and controllability of polymerization reaction, the alkyllithium compound is preferably n-butyllithium or sec-butyllithium. One of these organomonolithium compounds may be used alone, or two or more of may be used in combination.

Examples of polymerization reaction modes that may be used in the polymerization include batch mode and continuous mode polymerization reaction modes. In the continuous mode, one reactor or two or more connected reactors may be used. As a reactor for the continuous mode, for example, a tank or tubular reactor equipped with a stirrer is used. Preferably, in the continuous mode, a monomer, an inert solvent, and a polymerization initiator are continuously fed to the reactor, a polymer solution containing a polymer is obtained in the reactor, and the polymer solution is continuously discharged. As a reactor for the batch mode, for example, a tank reactor equipped with a stirrer is used. Preferably, in the batch mode, a monomer, an inert solvent, and a polymerization initiator are fed, the monomer is continuously or intermittently added during the polymerization when necessary, a polymer solution containing a polymer is obtained in the reactor, and the polymer solution is discharged after completing polymerization. According to the present embodiment, the continuous mode in which a polymer may be continuously discharged to be supplied to the next reaction in a short period of time is preferable in order to obtain a styrene-butadiene copolymer having an active end at a high ratio.

In the polymerization, polymerization is preferably performed in an inert solvent. As solvent, examples include hydrocarbon-based solvents such as saturated hydrocarbon, aromatic hydrocarbon, and the like. Specific examples of hydrocarbon-based solvent include aliphatic hydrocarbons such as butane, pentane, hexane, heptane, and the like; alicyclic hydrocarbons such as cyclopentane, cyclohexane, methylcyclopentane, methylcyclohexane, and the like; aromatic hydrocarbons such as benzene, toluene, xylene, and the like; and hydrocarbons that are mixtures thereof. Allenes and acetylenes as impurities are preferably treated with an organic metal compound before the solvent is supplied to the polymerization reaction, because, in this way, a styrene-butadiene copolymer having an active end at a high concentration tends to be obtained, and a modified styrene-butadiene rubber having a high modification rate tends to be obtained.

In the polymerization, a polar compound may be added. By adding polar compound, styrene may be randomly copolymerized with the 1,3-butadiene. Further, there is a tendency that the polar compound may also be used as a vinylation agent for controlling the microstructure of the 1,3-butadiene.

As the polar compound, for example, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, 2,2-bis(2-oxolanyl)propane, and the like; tertiary amine compounds such as tetramethylethylenediamine, dipiperidinoethane, trimethylamine, triethylamine, pyridine, quinuclidine, and the like; alkali metal alkoxide compounds such as potassium tert-amylate, potassium tert-butyrate, sodium tert-butyrate, sodium amylate, and the like; phosphine compounds such as triphenylphosphine and the like; and other compounds may be used. One of these polar compounds may be used alone or two or more may be used in combination.

In the polymerization, from the viewpoint of productivity, the polymerization temperature is preferably 0 °C or more, more preferably 120 °C or less, and even more preferably 50 °C or more and 100 °C or less. When the polymerization temperature is in this range, a sufficient reaction amount of the coupling agent with the active end after polymerization completion is likely to be secured.

The bound butadiene content in the styrene-butadiene copolymer or the modified styrene-butadiene rubber is not particularly limited. The bound butadiene content is preferably 40 mass% or more and 100 mass% or less, and more preferably 55 mass% or more and 80 mass% or less.

The bound styrene content in the styrene-butadiene copolymer or the modified styrene-butadiene rubber is not particularly limited. The bound styrene content is preferably more than 0 mass% and 60 mass% or less, and more preferably 20 mass% or more and 45 mass% or less.

When the bound butadiene content and the bound styrene content are in the ranges described above, low loss property and wear resistance performance of the rubber composition may be further improved.

The bound styrene content may be determined based on measurement using ultraviolet absorption of a phenyl group, which also allows the bound butadiene content to be determined.

In the styrene-butadiene copolymer or the modified styrene-butadiene rubber, the vinyl bond content in the butadiene bond unit is not particularly limited. The vinyl bond content is preferably 10 mol% or more and 75 mol% or less, and more preferably 20 mol% or more and 65 mol% or less. When the vinyl bond content is in a range described above, low loss property and wear resistance performance of the rubber composition may be further improved.

For modified styrene-butadiene rubber, the vinyl bond content (1,2-bond amount) in the butadiene bond unit may be determined by Hampton's method [R. R. Hampton, Analytical Chemistry, 21, 923 (1949)].

The alkoxysilyl group of the coupling agent represented by the general formula (I) tends to react with, for example, the active end of the styrene-butadiene copolymer to dissociate alkoxylithium and form a bond between the end of the styrene-butadiene copolymer chain and silicon of the coupling residual group. A value obtained by subtracting the number of SiOR having become nonexistent through the reaction from the total number of SiOR contained in one molecule of the coupling agent corresponds to the number of alkoxysilyl groups contained in the coupling residual group. The azasilacycle group of the coupling agent forms a >N-Li bond and a bond between the end of the styrene-butadiene copolymer and silicon of the coupling residual group. The >N-Li bond tends to easily become >NH and LiOH due to water or the like during finishing. Further, in the coupling agent, an unreacted residual alkoxysilyl group tends to easily become silanol (Si-OH group) with water or the like during finishing.

The reaction temperature in the reaction is preferably substantially equal to the polymerization temperature of the styrene-butadiene copolymer, more preferably 0 °C or more and 120 °C or less, and even more preferably 50 °C or more and 100 °C or less. The temperature change after the polymerization until the addition of the coupling agent is preferably 10 °C or less, and more preferably 5 °C or less.

The reaction time in the reaction is preferably 10 s or more, and more preferably 30 s or more. From the viewpoint of the coupling rate, the shorter the time from the end of the polymerization to the start of the reaction, the better. The time from the end of the polymerization to the start of the reaction is more preferably 5 min or less.

Mixing in the reaction may be any of mechanical stirring, stirring with a static mixer, and the like. In the case where the polymerization is the continuous mode, the reaction is preferably also the continuous mode. As a reactor used in the reaction, for example, a tank or tubular reactor equipped with a stirrer is used. The coupling agent may be diluted

with an inert solvent and continuously supplied to the reactor. In the case where the polymerization is the batch mode, the reaction may be performed by a method of charging the polymerization reactor with the coupling agent, or a method of transferring to another reactor.

In the general formula (I), A is preferably represented by one of the following general formulas (II) to (V). When A is represented by any of the general formulas (II) to (V), modified styrene-butadiene rubber having better performance is obtainable.

[Chem. 14]

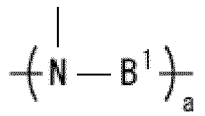

···· (II)

In the general formula (II), $B^1$ represents a single bond or a $C_1$-$C_{20}$ hydrocarbon group, and a represents an integer from 1 to 10. When present in a plurality, each of $B^1$ are independent.

[Chem. 15]

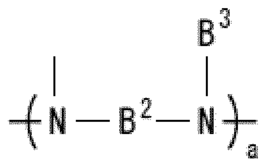

···· (III)

In the general formula (III), $B^2$ represents a single bond or a $C_1$-$C_{20}$ hydrocarbon group, $B^3$ represents a $C_1$-$C_{20}$ alkyl group, and a represents an integer from 1 to 10. When present in a plurality, each of any of $B^2$ and $B^3$ are independent.

[Chem. 16]

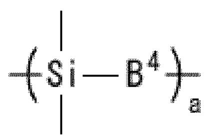

···· (IV)

In the general formula (IV), $B^4$ represents a single bond or a $C_1$-$C_{20}$ hydrocarbon group, and a represents an integer from 1 to 10. When present in a plurality, each of $B^4$ are independent.

[Chem. 17]

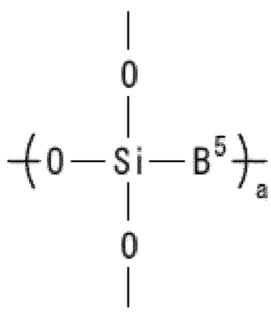

···· (V)

In the general formula (V), $B^5$ represents a single bond or a $C_1$-$C_{20}$ hydrocarbon group, and a represents an integer from 1 to 10. When present in a plurality, each of $B^5$ are independent.

Regarding $B^1$, $B^2$, $B^4$, and $B^5$ in the general formulas (II) to (V), a $C_1$-$C_{20}$ hydrocarbon group may be a $C_1$-$C_{20}$ alkylene group or the like.

Preferably, in the general formula (I), A is represented by the general formula (II) or (III) and k represents 0.

More preferably, in the general formula (I), A is represented by the general formula (II) or (III), k represents 0, and in the general formula (II) or (III), a represents an integer from 2 to 10.

Even more preferably, in the general formula (I), A is represented by the general formula (II), k represents 0, and, in the general formula (II), a represents an integer from 2 to 10.

As the coupling agent, bis(3-trimethoxysilylpropyl)-[3-(2,2-dimethoxy-1-aza-2-silacyclopentane)pro pyl]amine, tris(3-trimethoxysilylpropyl)amine, tris(3-triethoxysilylpropyl)amine, tris(3-trimethoxysilylpropyl)-[3-(2,2-dimethoxy-1-aza-2-silacyclopentane)pro pyl]-1,3-propanediamine, tetrakis[3-(2,2-dimethoxy-1-aza-2-silacyclopentane)propyl]-1,3-propanediami ne, tetrakis(3-trimethoxysilylpropyl)-1,3-propanediamine, tetrakis(3-trimethoxysilylpropyl)-1,3-bisaminomethylcyclohexane, tris(3-trimethoxysilylpropyl)-methyl-1,3-propanediamine, bis[3-(2,2-dimethoxy-1-aza-2-silacyclopentane)propyl]-(3-trimethoxysilylpro pyl)-methyl-1,3-propanediamine, and the like are examples, and among these, tetrakis(3-trimethoxysilylpropyl)-1,3-propanediamine and tetrakis(3-trimethoxysilylpropyl)-1,3-bisaminomethylcyclohexane are particularly preferable.

The amount of the compound represented by the general formula (I) added as the coupling agent may be adjusted so the mole number of the styrene-butadiene copolymer relative to the mole number of the coupling agent react at a desired stoichiometric ratio, which is likely to achieve a desired branching degree. Specifically, the mole number of the polymerization initiator relative to the mole number of the coupling agent is preferably 5.0-fold moles or more, and more preferably 6.0-fold moles or more. In this case, in the general formula (I), the number of functional groups in the coupling agent ($(m - 1) \times i + p \times j + k$) is preferably an integer from 5 to 10, and more preferably an integer from 6 to 10.

In order to obtain the modified styrene-butadiene rubber containing the specific high molecular weight component, the molecular weight distribution (Mw/Mn) of the styrene-butadiene copolymer is preferably 1.5 or more and 2.5 or less, and more preferably 1.8 or more and 2.2 or less. Further, the resulting modified styrene-butadiene rubber preferably has a molecular weight curve with a single peak detected by GPC.

When the peak molecular weight of the modified styrene-butadiene rubber detected by GPC is $Mp_1$ and the peak molecular weight of the styrene-butadiene copolymer is $Mp_2$, the following formula preferably holds.

$$(Mp_1/Mp_2) < 1.8 \times 10 - 12 \times (Mp_2 - 120 \times 10^4)^2 + 2$$

More preferably, $Mp_2$ is $20 \times 10^4$ or more and $80 \times 10^4$ or less, and $Mp_1$ is $30 \times 10^4$ or more and $150 \times 10^4$ or less. $Mp_1$ and $Mp_2$ are determined by the method described in the EXAMPLES section below.

The modification rate of the modified styrene-butadiene rubber is preferably 30 mass% or more, more preferably 50 mass% or more, and even more preferably 70 mass% or more. When the modification rate is 30 mass% or more, low loss property and wear resistance performance of the rubber composition may be further improved.

After the reaction, a deactivator, a neutralizer, and the like may be optionally added to the copolymer solution as needed. Examples of the deactivator include, but are not limited to, water; alcohols such as methanol, ethanol, and isopropanol; and the like. Examples of the neutralizer include, but are not limited to, carboxylic acids such as stearic acid, oleic acid, and versatic acid (a $C_9$-$C_{11}$, mainly $C_{10}$ mixture of highly branched carboxylic acids); an aqueous solution of an inorganic acid; carbon dioxide gas; and the like.

From the viewpoint of preventing gel formation after polymerization and improving stability in processing, an antioxidant is preferably added to the modified styrene-butadiene rubber. Examples of the antioxidant include 2,6-di-tert-butyl-4-hydroxytoluene (BHT), n-octadecyl-3-(4'-hydroxy-3',5'-di-tert-butylphenol)propionate, 2-methyl-4,6-bis[(octylthio)methyl]phenol, and the like.

As a method of collecting the modified styrene-butadiene rubber from the polymer solution, any known method may be used. Examples of the method include a method by which the polymer is filtered off after separating the solvent by steam stripping and the resultant is dehydrated and dried to collect the polymer, a method by which the solution is concentrated in a flashing tank and the resultant is devolatilized by a vent extruder or the like, and a method by which the solution is directly devolatilized using a drum dryer or the like.

The modified styrene-butadiene rubber obtained by reacting the coupling agent represented by the general formula (I) with the styrene-butadiene copolymer is, for example, represented by the following general formula (VI).

[Chem. 18]

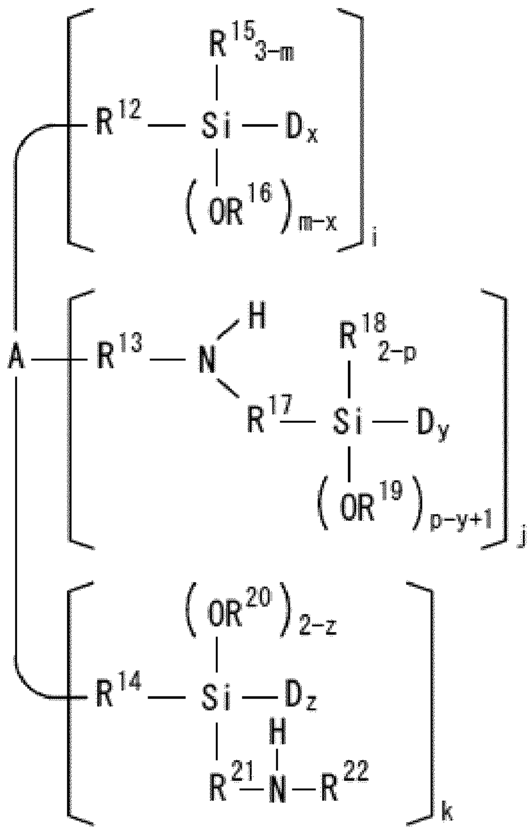

· · · · (VI)

In the general formula (VI), D represents a styrene-butadiene copolymer chain, and the weight average molecular weight of the styrene-butadiene copolymer chain is preferably $10 \times 10^4$ to $100 \times 10^4$. The styrene-butadiene copolymer chain is a structural unit of modified styrene-butadiene rubber and, for example, is a styrene-butadiene copolymer-derived structural unit obtained by reacting the styrene-butadiene copolymer with a coupling agent.

$R^{12}$, $R^{13}$, and $R^{14}$ each independently represent a single bond or a $C_1$-$C_{20}$ alkylene group.

$R^{15}$ and R18 each independently represent a $C_1$-$C_{20}$ alkyl group.

$R^{16}$, $R^{19}$, and $R^{20}$ each independently represent a hydrogen atom or a $C_1$-$C_{20}$ alkyl group.

$R^{17}$ and $R^{21}$ each independently represent a $C_1$-$C_{20}$ alkylene group.

$R^{22}$ represents a hydrogen atom or a $C_1$-$C_{20}$ alkyl group.

m and x each represent an integer from 1 to 3 where $x \leq m$, p represents 1 or 2, y represents an integer from 1 to 3 where $y \leq (p + 1)$, and z represents an integer 1 or 2.

When present in a plurality, each of any of D, $R^{12}$ to $R^{22}$, m, p, x, y, and z are independent, and may each be identical or different.

Further, i represents an integer from 0 to 6, j represents an integer from 0 to 6, and k represents an integer from 0 to 6, where (i + j + k) is an integer from 3 to 10 and $((x \times i) + (y \times j) + (z \times k))$ is an integer from 5 to 30.

A represents a $C_1$-$C_{20}$ hydrocarbon group or organic group containing at least one atom selected from the group consisting of oxygen, nitrogen, silicon, sulfur, and phosphorus, and not containing active hydrogen. The hydrocarbon group represented by A encompasses saturated, unsaturated, aliphatic, and aromatic hydrocarbon groups. The organic group not containing active hydrogen is, for example, an organic group not containing a functional group having active hydrogen, such as a hydroxyl group (-OH), a secondary amino group (>NH), a primary amino group ($-NH_2$), a sulfhydryl group (-SH), and the like.

In the general formula (VI), A is preferably represented by one of the general formulas (II) to (V). When A is represented by any of the general formulas (II) to (V), low loss property and wear resistance performance of the rubber composition may be further improved.

-- Third preferred embodiment of diene rubber component B --

The diene rubber component B being a styrene-butadiene rubber in which at least one end is modified with a modifier containing a compound (alkoxysilane) represented by the following general formula (1) is also preferable.

[Chem. 19]

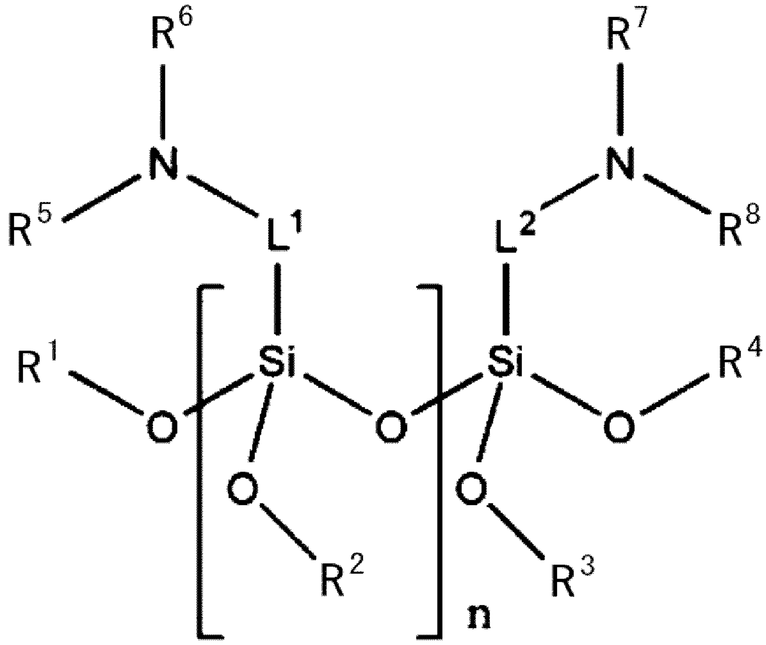

$\cdot\cdot\cdot\cdot$ (1)

The dispersibility of fillers such as silica may be increased by using, as the rubber component, styrene-butadiene rubber modified with a modifier containing a compound represented by the general formula (1) that contains oligosiloxane and a tertiary amino group, which are filler affinity working groups. As a result, the rubber composition according to the present disclosure has a greatly improved low loss property due to the improved dispersibility of the filler, and the rolling resistance of a tire to which the rubber composition is applied may be reduced, thereby improving fuel efficiency.

In the general formula (1), $R^1$ to $R^8$ are each independently a $C_1$-$C_{20}$ alkyl group; $L^1$ and $L^2$ are each independently a $C_1$-$C_{20}$ alkylene group; and n is an integer from 2 to 4.

Specifically, in the general formula (1), $R^1$ to $R^4$ may each be an independently substituted or unsubstituted $C_1$-$C_{20}$ alkyl group, and when any of $R^1$ to $R^4$ are substituted, each is independently substituted with one or more substituents selected from the group consisting of a $C_1$-$C_{10}$ alkyl group, a $C_3$-$C_{10}$ cycloalkyl group, a $C_1$-$C_{10}$ alkoxy group, a $C_4$-$C_{10}$ cycloalkoxy group, a $C_6$-$C_{12}$ aryl group, a $C_6$-$C_{12}$ aryloxy group, a $C_2$-$C_{12}$ alkanoyloxy group (Ra-COO-, where Ra is a $C_1$-$C_9$ alkyl group), a $C_7$-$C_{13}$ aralkyloxy group, a $C_7$-$C_{13}$ arylalkyl group, and a $C_7$-$C_{13}$ alkylaryl group.

More specifically, $R^1$ to $R^4$ may each be a substituted or unsubstituted $C_1$-$C_{10}$ alkyl group, and even more specifically, $R^1$ to $R^4$ may each be an independently substituted or unsubstituted $C_1$-$C_6$ alkyl group.

In the general formula (1), $R^5$ to $R^8$ may each be an independently substituted or unsubstituted $C_1$-$C_{20}$ alkyl group, specifically a substituted or unsubstituted $C_1$-$C_{10}$ alkyl group, and more specifically a substituted or unsubstituted $C_1$-$C_6$ alkyl group, which, when substituted, may be replaced by a substituent as previously described for $R^1$ to $R^4$.

When any of $R^5$ to $R^8$ are not an alkyl group but instead a hydrolysable substituent, the bonds of N-$R^5R^6$ and N-$R^7R^8$ may be hydrolyzed to N-H in the presence of moisture, which may adversely affect the processability of the polymer.

More specifically, in the compound represented by the general formula (1), $R^1$ to $R^4$ may each be a methyl group or ethyl group, and $R^5$ to $R^8$ may each be a $C_1$-$C_{10}$ alkyl group.

The amino groups in the compound represented by the general formula (1), that is N-$R^5R^6$ and N-$R^7R^8$, are preferably tertiary amino groups. The tertiary amino groups, when the compound represented by the general formula (1) is used as a modifier, further secure excellent processability.

When a protective group to protect the amino group is bonded to any of $R^5$ to $R^8$ or a hydrogen is bonded to $R^8$, realizing the effect of the compound represented by the general formula (1) may be difficult. In the case of hydrogen bonding, the anion reacts with the hydrogen during the modification, causing the anion to lose reactivity and making the modification reaction itself impossible. When a protective group is bound, the modification reaction takes place, but the primary or secondary amino group is deprotected by hydrolysis during subsequent processing while bonded to the end of the polymer. The deprotected primary or secondary amino group may cause high viscosity of the compound during subsequent mixing, leading to a decrease in processability.

Further, $L^1$ and $L^2$ in the compound represented by the general formula (1) are each independently a substituted or unsubstituted $C_1$-$C_{20}$ alkylene group.

More specifically, $L^1$ and $L^2$ may each independently be a $C_1$-$C_{10}$ alkylene group, and even more specifically a $C_1$-$C_6$ alkylene group such as a methylene group, an ethylene group, or a propylene group.

For $L^1$ and $L^2$ in the compound represented by the general formula (1), the closer the distance between the Si and N atoms in the molecule, the better the effect exhibited. However, when Si bonds directly to N, the bond between Si and N may be broken during subsequent treatment processing, and the secondary amino groups generated in the processing are likely to be washed away by water during the subsequent treatment processing, so that the modified styrene-butadiene rubber produced may have difficulty binding to a filler by an amino group that promotes bonding with fillers such as silica, and as a result, the effect of improving the dispersibility of fillers may be reduced. In consideration of the improvement effect due to the length of the bond between Si and N, $L^1$ and $L^2$ are more preferably each independently a $C_1$-$C_3$ alkylene group such as a methylene group, an ethylene group, or a propylene group, and more specifically, a propylene group. Further, $L^1$ and $L^2$ may each be substituted with a substituent as previously described for $R^1$ to $R^4$.

Further, the compound represented by the general formula (1) is preferably, for example, one of the compounds represented by the following structural formulas (1-1) to (1-5). In this way, a better low loss property may be realized.

[Chem. 20]

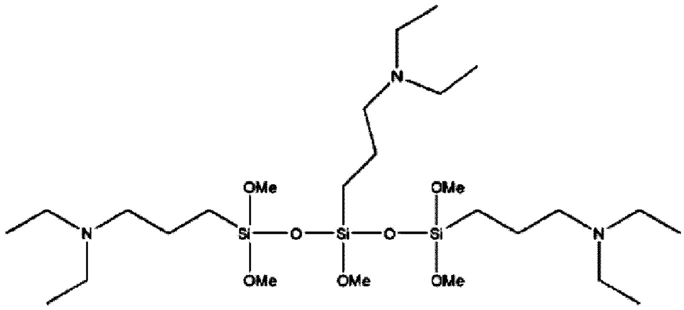

・・・・・(1-1)

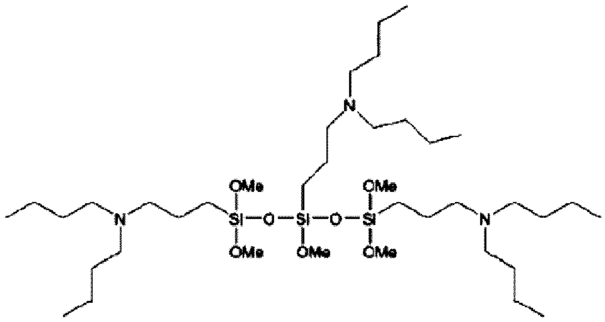

・・・・・(1-2)

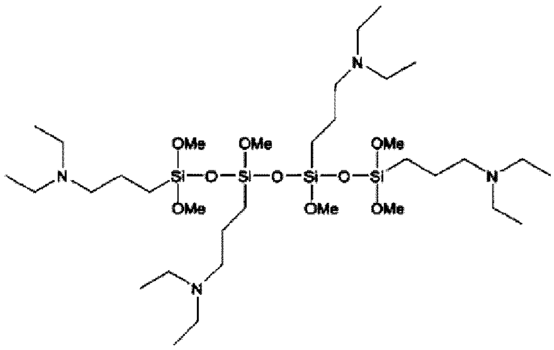

・・・・・(1-3)

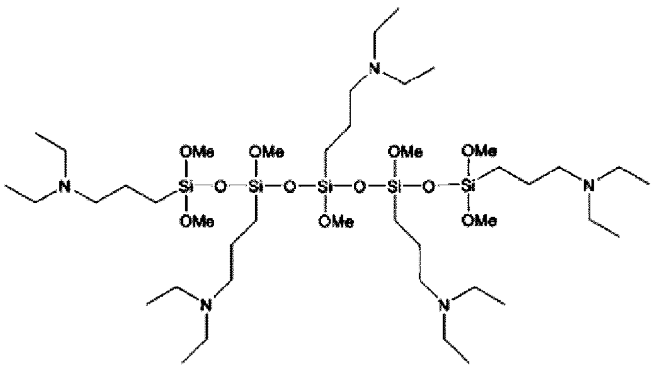

・・・・・(1-4)

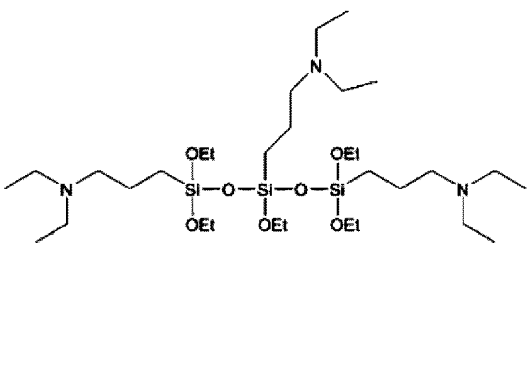

・・・・・(1-5)

The compound represented by the general formula (1) promotes the bonding of filler to the modified styrene-butadiene rubber more than a conventional modifier containing one amino group in the molecule, because the alkoxysilane structure bonds with the active end of the styrene-butadiene copolymer, while the Si-O-Si structure and the three or more amino groups bonded to the end of the copolymer exhibit affinity to a filler such as silica. Further, a degree of bonding of the active end of the styrene-butadiene copolymer is uniform, and when observing changes in molecular weight distribution before and after coupling, the molecular weight distribution remains constant after coupling rather than becoming larger. Therefore, the physical properties of the modified styrene-butadiene rubber itself do not deteriorate, and the processability of the rubber composition may be improved because the aggregation of filler in the rubber composition is hindered and the dispersibility of the filler may be improved. These effects, particularly when the rubber composition is applied to a tire, are able to improve fuel efficiency and wet gripping performance in a well-balanced manner.

The compound represented by the general formula (1) may be produced through a condensation reaction represented by the following reaction scheme.

[Chem. 21]

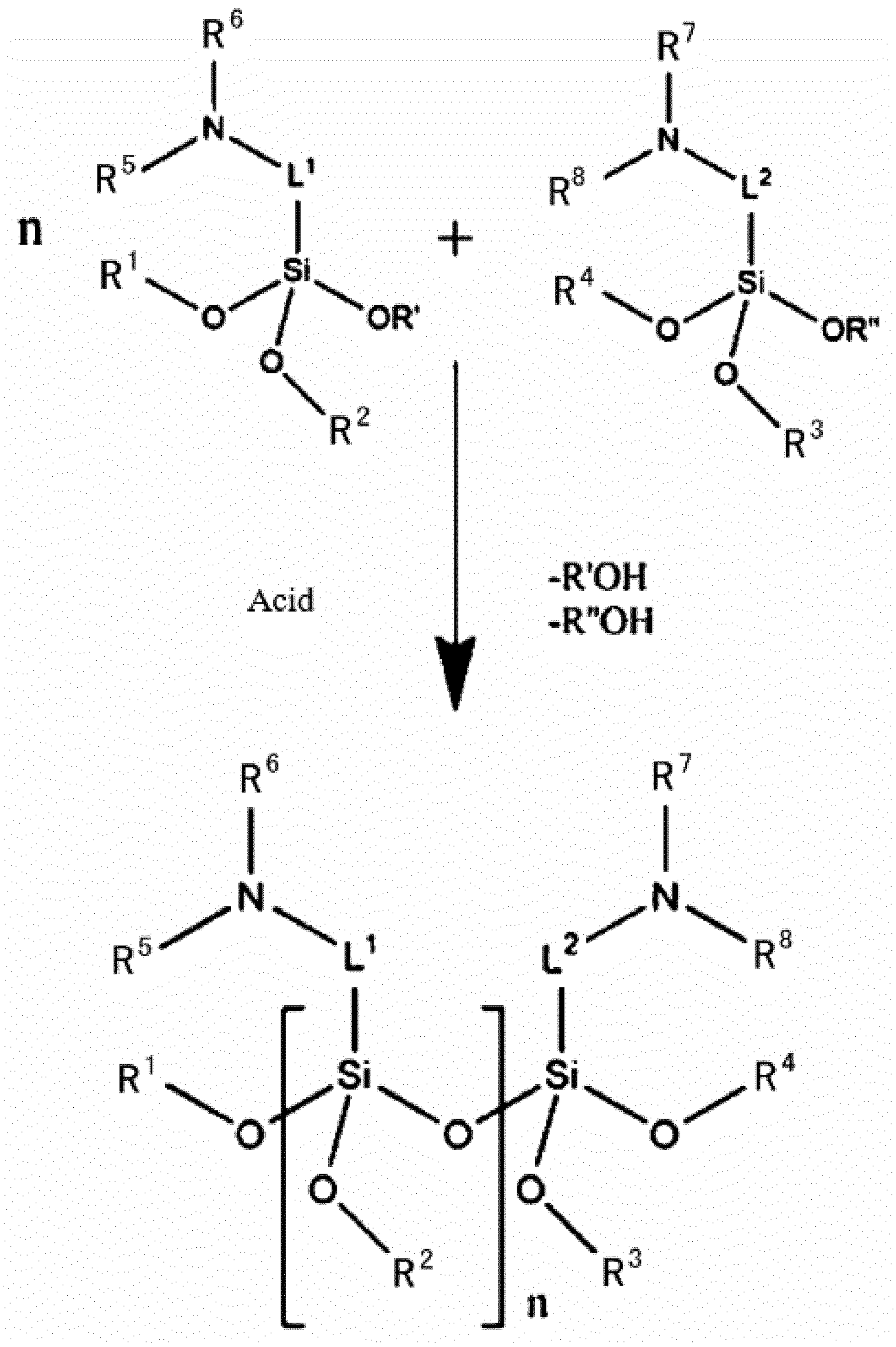


In the above reaction scheme, $R^1$ to $R^8$, $L^1$, $L^2$, and n are as defined in the general formula (1), and R' and R" are any substituents that do not affect the condensation reaction. For example, R' and R" may each independently be identical to any one of $R^1$ to $R^4$.

The reaction in the above reaction scheme proceeds in the presence of an acid. Any acid that is generally used for condensation reactions may be used without limitation. A person skilled in the art may select the most appropriate acid in consideration of various processing variables, such as the type of reactor in which the reaction is carried out, starting materials, reaction temperature, and the like.

The styrene-butadiene rubber modified by a modifier containing a compound represented by the general formula (1) may have a narrow molecular weight distribution (Mw/Mn, also called "polydispersity index" (PDI)) of 1.1 to 3.0. When the molecular weight distribution of the modified styrene-butadiene rubber is greater than 3.0 or less than 1.1, tensile

properties and viscoelasticity may decrease when applied to the rubber composition. Considering the remarkable effect of improving tensile properties and viscoelasticity by controlling the molecular weight distribution of the modified styrene-butadiene rubber, the molecular weight distribution of the modified styrene-butadiene rubber is preferably in a range from 1.3 to 2.0. The modified styrene-butadiene rubber has a similar molecular weight distribution to that of the styrene-butadiene copolymer before modification, due to the use of the modifier described above.

The molecular weight distribution of the modified styrene-butadiene rubber is calculable from the ratio (Mw/Mn) of weight average molecular weight (Mw) to number average molecular weight (Mn). The number average molecular weight (Mn) is the common average of the molecular weights of individual polymer molecules, calculated by measuring the molecular weight of n polymer molecules and dividing the total of these molecular weights by n, and the weight average molecular weight (Mw) is the molecular weight distribution of the polymer composition. The average overall molecular weight is expressible in grams per mole (g/mol).

The weight average molecular weight and the number average molecular weight are each a polystyrene-equivalent molecular weight analyzed by gel permeation chromatography (GPC).

Further, the modified styrene-butadiene rubber meets the above conditions for molecular weight distribution and at the same time has a number average molecular weight (Mn) of 50,000 g/mol to 2,000,000 g/mol, and more specifically may have a number average molecular weight of 200,000 g/mol to 800,000 g/mol. The modified styrene-butadiene rubber has a weight average molecular weight (Mw) of 100,000 g/mol to 4,000,000 g/mol, and more specifically may have a weight average molecular weight of 300,000 g/mol to 1,500,000 g/mol.

When the weight average molecular weight (Mw) of the modified styrene-butadiene rubber is less than 100,000 g/mol or the number average molecular weight (Mn) is less than 50,000 g/mol, there is a risk of a decrease in tensile properties when applied to the rubber composition. Further, when the weight average molecular weight (Mw) exceeds 4,000,000 g/mol or the number average molecular weight (Mn) exceeds 2,000,000 g/mol, the operability of the rubber composition deteriorates and kneading becomes difficult due to the reduced processability of the modified styrene-butadiene rubber. Further, sufficient improvement to the physical properties of the rubber composition may become difficult.

More specifically, when the modified styrene-butadiene rubber both satisfies the weight average molecular weight (Mw) and number average molecular weight (Mn) conditions as well as the molecular weight distribution described above, when applied to a rubber composition, the viscoelasticity and processability of the rubber composition may be improved in a balanced manner.

The modified styrene-butadiene rubber preferably has a vinyl bond content of 5 % or more in the butadiene moiety, more preferably 10 % or more, and preferably 60 % or less. By setting the vinyl bond content in the butadiene moiety in a range described above, glass transition temperature is adjustable to an appropriate range.

The modified styrene-butadiene rubber has a Mooney viscosity (MV) at 100 °C of 40 to 140, and more specifically may have a Mooney viscosity at 100 °C of 60 to 100. When the Mooney viscosity is in a range described above, better processability is exhibited.

The Mooney viscosity is measurable with a Mooney viscometer, for example an MV2000E produced by Monsanto Inc., at 100 °C and a rotor speed of 2 $\pm$ 0.02 rpm, using a large rotor. A sample used in this case is measurable by leaving the sample at room temperature (23 $\pm$ 3 °C) for 30 min or more, taking 27 $\pm$ 3 g of the sample, filling inside a die cavity, and activating a platen.

As mentioned above, one end of the modified styrene-butadiene rubber is preferably modified by a modifier containing a compound represented by the general formula (1), but another end is preferably further modified by a modifier containing a compound represented by the following general formula (2). Modifying both ends of the modified styrene-butadiene rubber further improves dispersibility of filler in the rubber composition and enables higher levels of both fuel efficiency and wet gripping performance for a tire to which the rubber composition is applied.

[Chem. 22]

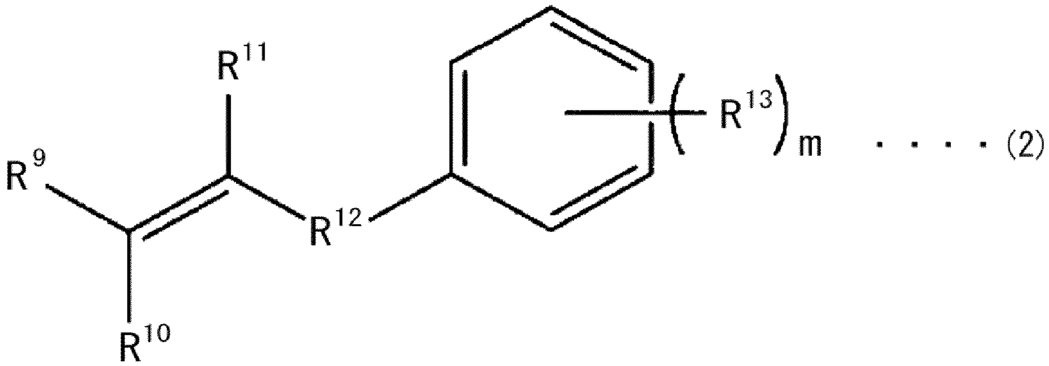

In the general formula (2), $R^9$ to $R^{11}$ are each independently hydrogen; a $C_1$-$C_{30}$ alkyl group; a $C_2$-$C_{30}$ alkenyl group; a $C_2$-$C_{30}$ alkynyl group; a $C_1$-$C_{30}$ heteroalkyl group; a $C_2$-$C_{30}$ heteroalkenyl group; a $C_2$-$C_{30}$ heteroalkynyl group; a $C_5$-$C_{30}$ cycloalkyl group; a $C_6$-$C_{30}$ aryl group; or a $C_3$-$C_{30}$ heterocyclic group.

Further, in the general formula (2), $R^{12}$ is a single bond; a substituent-substituted or unsubstituted $C_1$-$C_{20}$ alkylene group; a substituent-substituted or unsubstituted $C_5$-$C_{20}$ cycloalkylene group; or a substituent-substituted or unsubstituted $C_5$-$C_{20}$ arylene group, wherein the above substituent is a $C_1$-$C_{10}$ alkyl group, a $C_5$-$C_{10}$ cycloalkyl group, or a $C_6$-$C_{20}$ aryl group.

Further, in the general formula (2), $R^{13}$ is a $C_1$-$C_{30}$ alkyl group; a $C_2$-$C_{30}$ alkenyl group; a $C_2$-$C_{30}$ alkynyl group; a $C_1$-$C_{30}$ heteroalkyl group; a $C_2$-$C_{30}$ heteroalkenyl group; a $C_2$-$C_{30}$ heteroalkynyl group; a $C_5$-$C_{30}$ cycloalkyl group; a $C_6$-$C_{30}$ aryl group; a $C_3$-$C_{30}$ heterocyclic group; or an active group represented by general formula (2a) or general formula (2b) below, where m is an integer from 1 to 5, and at least one of $R^{13}$ is an active group represented by the general formula (2a) or the general formula (2b) below. When m is an integer from 2 to 5, each of the plurality of $R^{13}$ may be identical or different from each other.

[Chem. 23]

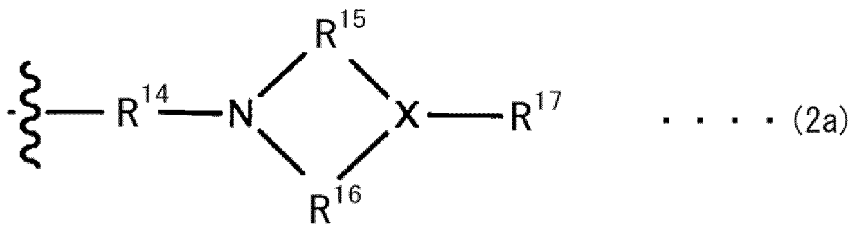

Further, in the general formula (2a), $R^{14}$ is a substituent-substituted or unsubstituted $C_1$-$C_{20}$ alkylene group; a substituent-substituted or unsubstituted $C_5$-$C_{20}$ cycloalkylene group; or a substituent-substituted or unsubstituted $C_6$-$C_{20}$ arylene group, wherein the above substituent is a $C_1$-$C_{10}$ alkyl group, a $C_5$-$C_{10}$ cycloalkyl group, or a $C_6$-$C_{20}$ aryl group.

Further, in the general formula (2a), $R^{15}$ and $R^{16}$ are each independently a $C_1$-$C_{20}$ alkylene group unsubstituted or substituted with a $C_1$-$C_{10}$ alkyl group, a $C_5$-$C_{10}$ cycloalkyl group, or a $C_6$-$C_{20}$ aryl group.

Further, in the general formula (2a), $R^{17}$ is hydrogen; a $C_1$-$C_{30}$ alkyl group; a $C_2$-$C_{30}$ alkenyl group; a $C_2$-$C_{30}$ alkynyl group; a $C_1$-$C_{30}$ heteroalkyl group; a $C_2$-$C_{30}$ heteroalkenyl group; a $C_2$-$C_{30}$ heteroalkynyl group; a $C_5$-$C_{30}$ cycloalkyl group; a $C_6$-$C_{30}$ aryl group; or a $C_3$-$C_{30}$ heterocyclic group, and X is an atom of N, O, or S, except that when X is O or S, $R^{17}$ is not present.

[Chem. 24]

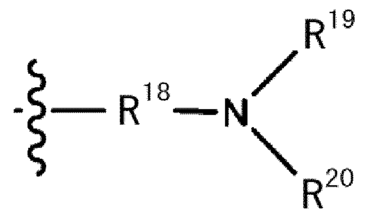

· · · · (2b)

In the general formula (2b), $R^{18}$ is a substituent-substituted or unsubstituted $C_1$-$C_{20}$ alkylene group; a substituent-substituted or unsubstituted $C_5$-$C_{20}$ cycloalkylene group; or a substituent-substituted or unsubstituted $C_6$-$C_{20}$ arylene group, wherein the above substituent is a $C_1$-$C_{10}$ alkyl group, a $C_5$-$C_{10}$ cycloalkyl group, or a $C_6$-$C_{20}$ aryl group.

Further, in the general formula (2b), $R^{19}$ to $R^{20}$ are each independently a $C_1$-$C_{30}$ alkyl group; a $C_2$-$C_{30}$ alkenyl group; a $C_2$-$C_{30}$ alkynyl group; a $C_1$-$C_{30}$ heteroalkyl group; a $C_2$-$C_{30}$ heteroalkenyl group; a $C_2$-$C_{30}$ heteroalkynyl group; a $C_5$-$C_{30}$ cycloalkyl group; a $C_6$-$C_{30}$ aryl group; or a $C_3$-$C_{30}$ heterocyclic group.

Further, in the compound represented by the general formula (2), $R^9$ to $R^{11}$ may each independently be hydrogen; a $C_1$-$C_{10}$ alkyl group; a $C_2$-$C_{10}$ alkenyl group; or a $C_2$-$C_{10}$ alkynyl group, $R^{12}$ may be a single bond or an unsubstituted $C_1$-$C_{10}$ alkylene group, and $R^{13}$ may be a $C_1$-$C_{10}$ alkyl group; a $C_2$-$C_{10}$ alkenyl group; a $C_2$-$C_{10}$ alkynyl group; or an active group represented by the general formula (2a) or the general formula (2b). In the general formula (2a), $R^{14}$ may be an unsubstituted $C_1$-$C_{10}$ alkylene group, $R^{15}$ and $R^{16}$ may each independently be an unsubstituted $C_1$-$C_{10}$ alkylene group, $R^{17}$ may be a $C_1$-$C_{10}$ alkyl group; a $C_5$-$C_{20}$ cycloalkyl group; a $C_6$-$C_{20}$ aryl group; or a $C_3$-$C_{20}$ heterocyclic group. In the general formula (2b), $R^{18}$ may be an unsubstituted $C_1$-$C_{10}$ alkylene group, and $R^{19}$ and $R^{20}$ may each independently be a $C_1$-$C_{10}$ alkyl group; a $C_5$-$C_{20}$ cycloalkyl group; a $C_6$-$C_{20}$ aryl group; or a $C_3$-$C_{20}$ heterocyclic group.

More specifically, the compounds represented by the general formula (2) may be compounds represented by the following structural formulas (2-1) to (2-3).

[Chem. 25]

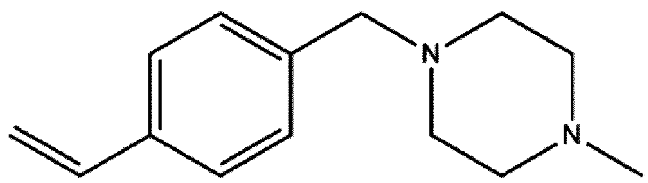

· · · · (2-1)

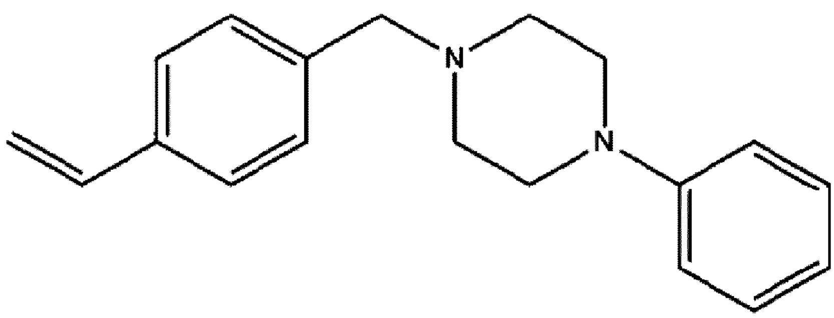

· · · · (2-2)

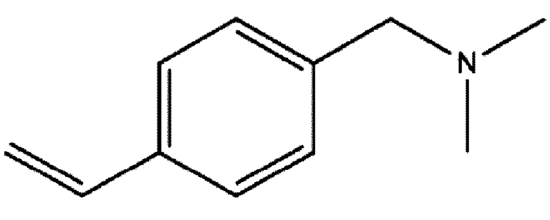

· · · · (2-3)

When the styrene-butadiene copolymer is modified by a modifier containing a compound represented by the

general formula (2), the modifier containing the compound represented by formula (2) is used as a modification initiator.

Specifically, for example, by polymerizing butadiene monomer and styrene monomer in the presence of a modifier containing a compound represented by the general formula (2) in a hydrocarbon solvent, a modified group derived from the compound represented by the general formula (2) may be added to the styrene-butadiene copolymer.

- Other rubber -

The rubber component may further contain another rubber component. The content of the other rubber component, per 100 parts by mass of the rubber component, is preferably 35 parts by mass or less, more preferably 10 parts by mass or less, even more preferably 5 parts by mass or less, and even more preferably 0 parts by mass (that is, the rubber component consists only of the diene rubber component A and the diene rubber component B).

(Resin component C)

The rubber composition for a tire contains the resin component C. The resin component C has an SP value difference from the diene rubber component A of 1.40 $(cal/cm^3)^{1/2}$ or less, and the mass ratio R (resin component C/diene rubber component A) to the diene rubber component A of 0.5 or more.

The difference in SP values between the resin component C and the diene rubber component A being 1.40 $(cal/cm^3)^{1/2}$ or less increases compatibility with the diene rubber component A, controls mobility of the rubber component, and improves hysteresis loss (tan6) in a low temperature range, thereby improving wet gripping performance of a tire to which the rubber composition is applied. From the viewpoint of further improving compatibility, the difference in SP values between the resin component C and the diene rubber component A is preferably 1.35 $(cal/cm^3)^{1/2}$ or less, more preferably 0.50 $(cal/cm^3)^{1/2}$ or less, even more preferably 0.45 $(cal/cm^3)^{1/2}$ or less, even more preferably 0.30 $(cal/cm^3)^{1/2}$ or less, and even more preferably 0.25 $(cal/cm^3)^{1/2}$ or less.

When the mass ratio R (resin component C/diene rubber component A) of the resin component C to the diene rubber component A is less than 0.5, the effect of improving wet gripping performance of a tire to which the rubber composition is applied may not be sufficiently achieved. From the viewpoint of effectively improving wet gripping performance, the mass ratio R (resin component C/diene rubber component A) of the resin component C to the diene rubber component A is preferably 0.65 or more, more preferably 0.7 or more, and even more preferably 0.8 or more. The mass ratio R (resin component C/diene rubber component A) of the resin component C to the diene rubber component A is preferably 2.0 or less, more preferably 1.9 or less, and even more preferably 1.8 or less.

The content of the resin component C relative to 100 parts by mass of the rubber component is preferably 20 parts by mass or more and 50 parts by mass or less. When the content of the resin component C relative to 100 parts by mass of the rubber component is 20 parts by mass or more, the effect of the resin component is fully expressible, and when the content is 50 parts by mass or less, the resin component is less likely to precipitate from the tire and the effect of the resin component is fully expressible. Further, in this range, loss tangent measured by atomic force microscopy tends to be favorable according to the present disclosure, and wet gripping performance of a tire may be improved more effectively. From the same perspective, the content of the resin component C relative to 100 parts by mass of the rubber component is more preferably 25 parts by mass or more, and even more preferably 30 parts by mass or more, and more preferably less than 50 parts by mass, even more preferably 45 parts by mass or less, and even more preferably 40 parts by mass or less.

The resin component C preferably has a softening point of more than 110 °C and a polystyrene-equivalent weight average molecular weight of 200 g/mol to 1,600 g/mol. In this case, compatibility with a rubber component such as the diene rubber component A is increased, further improving wet gripping performance of a tire.

When the softening point of the resin component C is more than 110 °C, a tire to which the rubber composition is applied may be sufficiently reinforced. From the same perspective, and in view of tire wear resistance performance, the softening point of the resin component C is more preferably 116 °C or more, even more preferably 120 °C or more, even more preferably 123 °C or more, and even more preferably 127 °C or more. Further, from the same perspective, and in view of processability, the softening point of the resin component C is preferably 160 °C or less, more preferably 150 °C or less, even more preferably 145 °C or less, even more preferably 141 °C or less, and even more preferably 136 °C or less.

When polystyrene-equivalent weight average molecular weight of the resin component C is 200 g/mol or more, the resin component is less likely to precipitate from a tire and the effect of the resin component is fully expressible, and when 1,600 g/mol or less, the resin component is more compatible with the rubber component.

From the viewpoint of inhibiting precipitation of the resin component from a tire and inhibiting deterioration of tire appearance, the polystyrene-equivalent weight average molecular weight of the resin component C is preferably 500 g/mol or more, more preferably 550 g/mol or more, even more preferably 600 g/mol or more, even more preferably 650 g/mol or more, and even more preferably 700 g/mol. From the viewpoint of increasing compatibility of the resin

component with the rubber component and enhancing the effect of the resin component, the polystyrene-equivalent weight average molecular weight of the resin component C is preferably 1,570 g/mol or less, more preferably 1,530 g/mol or less, even more preferably 1,500 g/mol or less, even more preferably 1,470 g/mol or less, even more preferably 1,430 g/mol or less, even more preferably 1,400 g/mol or less, even more preferably 1,370 g/mol or less, even more preferably 1,330 g/mol or less, even more preferably 1,300 g/mol or less, even more preferably 1,200 g/mol or less, even more preferably 1,100 g/mol or less, even more preferably 1,000 g/mol or less, and even more preferably 950 g/mol or less.

For the resin component C, a ratio ($Ts_{HR}/Mw_{HR}$) of the softening point ($Ts_{HR}$) (unit: °C) to the polystyrene-equivalent weight average molecular weight ($Mw_{HR}$) (unit: g/mol) is preferably 0.07 or more, more preferably 0.083 or more, even more preferably 0.095 or more, even more preferably 0.104 or more, even more preferably 0.125 or more, even more preferably 0.135 or more, even more preferably 0.14 or more, and even more preferably 0.141 or more. Further, the ratio ($Ts_{HR}/Mw_{HR}$) is preferably 0.25 or less, more preferably 0.24 or less, even more preferably 0.23 or less, even more preferably 0.19 or less, even more preferably 0.18 or less, and even more preferably 0.17 or less.

The softening point and the polystyrene-equivalent weight average molecular weight of the resin component C may be determined by a method described in the EXAMPLES section below.

The resin component C is preferably a hydrogenated resin. In this case, compatibility is increased with a rubber component, in particular the diene rubber component A, and wet gripping performance may be further improved. Here, hydrogenated resin means a resin obtained by reductive hydrogenation of the resin, and also includes an at least partially hydrogenated resin. Resins as raw material for the hydrogenated resin component include $C_5$ resins, $C_5/C_9$ resins, $C_9$ resins, terpene resins, dicyclopentadiene resins, terpene-aromatic compound resins, and the like. These resins may be used singly or in combination.

Further, the resin component C is preferably a hydrogenated resin and the difference in SP value from the diene rubber component A is preferably 0.50 $(cal/cm^3)^{1/2}$ or less.

$C_5$ resins include aliphatic petroleum resins obtained by (co)polymerizing $C_5$ fractions obtained from the thermal cracking of naphtha in the petrochemical industry.

The $C_5$ fraction usually includes an olefinic hydrocarbon such as 1-pentene, 2-pentene, 2-methyl-1-butene, 2-methyl-2-butene, or 3-methyl-1-butene; a diolefinic hydrocarbon such as 2-methyl-1,3-butadiene, 1,2-pentadiene, 1,3-pentadiene, or 3-methyl-1,2-butadiene; or the like. Commercially available $C_5$ resins may be used.

$C_5/C_9$ resins refer to $C_5/C_9$ synthetic petroleum resins. Examples of $C_5/C_9$ resins include solid polymers obtained by polymerizing a petroleum-derived $C_5/C_{11}$ fraction using a Friedel-Crafts catalyst such as $AlCl_3$ or $BF_3$. Specific examples include copolymers having, as main components, styrene, vinyltoluene, α-methylstyrene, indene, and the like.

As a $C_5/C_9$ resin, a resin with little $C_9$ or higher component is preferable from the viewpoint of compatibility with the rubber component. Here, including "little $C_9$ or higher component" means that the amount of $C_9$ or higher component in the total amount of the resin is less than 50 mass%, and preferably 40 mass% or less. Commercially available $C_5/C_9$ resins may be used.

$C_9$ resins refer to $C_9$ synthetic petroleum resins, such as solid polymers obtained by polymerizing a $C_9$ fraction using a Friedel-Crafts catalyst such as $AlCl_3$ or $BF_3$, for example.

Examples of $C_9$ resins include copolymers having, as main components, indene, α-methylstyrene, vinyltoluene, and the like.

Terpene resins are solid-state resins obtained by compounding turpentine oil, which is obtainable when obtaining rosin from pine trees, or polymerizable components separated from the turpentine, and then polymerizing the turpentine or the polymerizable component using a Friedel-Crafts catalyst. Examples of terpene resins include β-pinene resins and α-pinene resins. Further, a typical example of a terpene-aromatic compound resin is a terpene-phenol resin. The terpene-phenol resin may be obtained through various methods including: causing terpenoids and various phenols to react with each other using a Friedel-Crafts catalyst, or further condensing the resultant with formalin. Terpenoids as raw material are not limited. The terpenoids are preferably monoterpene hydrocarbons such as α-pinene and limonene, more preferably contain α-pinene, and particularly preferably are α-pinene. Styrene and other substances may be included in the framework.

Dicyclopentadiene resins (DCPD resin) refers to, for example, resins obtained by polymerizing dicyclopentadiene using a Friedel-Crafts catalyst such as $AlCl_3$, $BF_3$, or the like.

Further, raw material for the hydrogenated resin component may include, for example, a copolymerized $C_5$ fraction and dicyclopentadiene resin ($C_5$-DCPD resin).

Here, when the dicyclopentadiene-derived component in the total resin content is 50 mass% or more, $C_5$-DCPD resin is included as dicyclopentadiene resin. When the dicyclopentadiene-derived component in the total resin content is less than 50 mass%, $C_5$-DCPD resin is included as $C_5$ resin. The same is true even when a small amount of a third component or the like is included.

From the viewpoint of increasing the compatibility with the rubber component and improving wet gripping performance of a tire to which the rubber composition is applied, the resin component C is preferably at least one selected

from the group consisting of hydrogenated $C_5$ resin, hydrogenated $C_5/C_9$ resin, hydrogenated $C_9$ resin, hydrogenated dicyclopentadiene resin (hydrogenated DCPD resin), and hydrogenated terpene resin. The resin component C is more preferably at least one selected from the group consisting of hydrogenated $C_5$ resin, hydrogenated $C_5/C_9$ resin, hydrogenated dicyclopentadiene resin, and hydrogenated terpene resin. The resin component C is even more preferably at least one selected from the group consisting of hydrogenated $C_5$ resin and hydrogenated $C_5/C_9$ resin. The resin component C is even more preferably hydrogenated $C_5$ resin. Further, the resin component C preferably has at least a hydrogenated DCPD structure or a hydrogenated cyclic structure in the monomer.

(Filler)

The rubber composition for a tire may contain a filler. The inclusion of a filler improves a reinforcing property of the rubber composition.

Filler content in the rubber composition is preferably in a range from 40 parts by mass to 125 parts by mass relative to 100 parts by mass of the rubber component. When the filler content in the rubber composition is 40 parts by mass or more relative to 100 parts by mass of the rubber component, a tire to which the rubber composition is applied is sufficiently reinforced and wear resistance performance is improved. Further, when the filler content in the rubber composition is 125 parts by mass or less relative to 100 parts by mass of the rubber component, the elastic modulus of the rubber composition does not become too high, and wet gripping performance of a tire to which the rubber composition is applied is further improved. Further, from the viewpoint of reducing rolling resistance of a tire (from the viewpoint of improving fuel efficiency), the filler content in the rubber composition relative to 100 parts by mass of the rubber component is preferably 45 parts by mass or more, more preferably 50 parts by mass or more, and even more preferably 55 parts by mass or more. Further, from the viewpoint of further improving wet gripping performance of a tire, the filler content in the rubber composition relative to 100 parts by mass of the rubber component is preferably 105 parts by mass or less, more preferably 100 parts by mass or less, and even more preferably 95 parts by mass or less.

- Silica -

The filler preferably includes silica, and more preferably includes silica having a nitrogen adsorption specific surface area (Brunauer-Emmett-Teller (BET) method) of 100 $m^2/g$ or more and less than 330 $m^2/g$. When the nitrogen adsorption specific surface area (BET method) of silica is 100 $m^2/g$ or more, a tire to which the rubber composition is applied may be sufficiently reinforced and tire rolling resistance may be reduced. When the nitrogen adsorption specific surface area (BET method) of silica is less than 330 $m^2/g$, the elastic modulus of the rubber composition does not become too high, and wet gripping performance of a tire to which the rubber composition is applied may be further improved. From the viewpoint of lowering rolling resistance and further improving tire wear resistance performance, the nitrogen adsorption specific surface area (BET method) of silica is preferably 130 $m^2/g$ or more, and even more preferably 150 $m^2/g$ or more. Further, from the viewpoint of further improving wet gripping performance of a tire, the nitrogen adsorption specific surface area (BET method) of silica is preferably 300 $m^2/g$ or less, more preferably 280 $m^2/g$ or less, and even more preferably 270 $m^2/g$ or less.

Examples of silica include wet silica (hydrous silicate), dry silica (anhydrous silicate), calcium silicate, and aluminum silicate. Of these, wet silica is preferable. One kind of silica may be used alone, or two or more kinds may be used in combination.

From the viewpoint of improving mechanical strength and wear resistance performance of a tire, the content of silica in the rubber composition relative to 100 parts by mass of the rubber component is preferably 40 parts by mass or more, more preferably 45 parts by mass or more, even more preferably 50 parts by mass or more, and even more preferably 55 parts by mass or more. Further, from the viewpoint of further improving wet gripping performance of a tire, the content of silica in the rubber composition relative to 100 parts by mass of the rubber component is preferably 125 parts by mass or less, more preferably 105 parts by mass or less, even more preferably 100 parts by mass or less, and even more preferably 95 parts by mass or less.

- Carbon Black -

Filler preferably also includes carbon black. Carbon black is able to reinforce the rubber composition and improve wear resistance performance of the rubber composition.

Carbon black is not particularly limited. Carbon black may be general purpose furnace (GPF), fast extrusion furnace (FEF), high abrasion furnace (HAF), intermediate super abrasion furnace (ISAF), or super abrasion furnace (SAF) grade carbon black, for example. One of these carbon blacks may be used alone or two or more may be used in combination.

From the viewpoint of improving wear resistance performance of the rubber composition and a tire to which

the rubber composition is applied, the content of carbon black in the rubber composition, relative to 100 parts by mass of the rubber component, is preferably 1 part by mass or more, more preferably 3 parts by mass or more, and even more preferably 5 parts by mass or more. From the viewpoint of operability of the rubber composition, the content of carbon black in the rubber composition, relative to 100 parts by mass of the rubber component, is preferably 20 parts by mass or less, and more preferably 15 parts by mass or less.

When filler contains silica and carbon black, the ratio of silica to the total amount of silica and carbon black is preferably 80 mass% or more and less than 100 mass%, and more preferably 90 mass% or more and less than 100 mass%. The ratio of silica being 80 mass% or more improves mechanical strength of a tire to which the rubber composition is applied and reduces rolling resistance.

- Other filler -

Aside from silica and carbon black, the filler may include an inorganic filler such as clay, talc, calcium carbonate, aluminum hydroxide, or the like.

Other fillers as mentioned above are preferably included to an extent that the ratio of silica in the filler is 70 mass% or more. The ratio of silica in the filler being 70 mass% or more improves mechanical strength of a tire to which the rubber composition is applied and further reduces rolling resistance. The ratio of silica in the filler is more preferably 80 mass% or more, even more preferably 85 mass% or more, and even more preferably 90 mass% or more to less than 100 mass%.

(Styrenic thermoplastic elastomer)

The rubber composition for a tire may contain a styrenic thermoplastic elastomer (TPS). Styrenic thermoplastic elastomer (TPS) includes a styrene-based polymer block (hard segment) and a conjugated diene-based polymer block (soft segment). The styrene-based polymer block forms a physical cross-link and serves as a bridge point, while the conjugated diene-based polymer block provides rubber elasticity. Double bonds in the conjugated diene-based polymer block (soft segment) may be partially or fully hydrogenated.

Styrenic thermoplastic elastomer (TPS) is thermoplastic, while the rubber component (preferably diene rubber) is not thermoplastic. Therefore, styrenic thermoplastic elastomer (TPS) is not included in the rubber component, according to the present disclosure. The content of styrenic thermoplastic elastomer (TPS), relative to 100 parts by mass of the rubber component, is 1 part by mass to 30 parts by mass.

As the styrenic thermoplastic elastomer (TPS), examples include styrene/butadiene/styrene (SBS) block copolymers, styrene/isoprene/styrene (SIS) block copolymers, styrene/butadiene/isoprene/styrene (SBIS) block copolymers, styrene/butadiene (SB) block copolymers, styrene/isoprene (SI) block copolymers, styrene/butadiene/isoprene (SBI) block copolymers, styrene/ethylene/butylene/styrene (SEBS) block copolymers, styrene/ethylene/propylene/styrene (SEPS) block copolymers, styrene/ethylene/ethylene/propylene/styrene (SEEPS) block copolymers, styrene/ethylene/butylene (SEB) block copolymers, styrene/ethylene/propylene (SEP) block copolymers, styrene/ethylene/ethylene/propylene (SEEP) block copolymers, and the like.

(Other components)

The rubber composition for a tire may contain the aforementioned rubber component, resin component, filler, styrenic thermoplastic elastomer, and various components normally used in the rubber industry. For example, a silane coupling agent, an age resistor, a wax, a softener, a processing aid, stearic acid, zinc oxide, a vulcanization accelerator, a vulcanizing agent, and the like may be selected and included as appropriate to an extent that is not detrimental to the present disclosure. As such compounding agents, commercial products may be used as appropriate.

When the rubber composition for a tire contains silica, a silane coupling agent is preferably included to improve the effect of the silica. As a silane coupling agent, examples include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilyl ethyl-N,N-dimethylthiocarbamoyl tetrasulfide, 3-trimethoxysilylpropylbenzothiazolyl tetrasulfide 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl)tetrasulfide, 3-mercaptopropyldimethoxymethyl silane, dimethoxymethyl silylpropyl-N,N-dimethylthiocarbamoyl tetrasulfide, dimethoxymethylsilylpropylbenzothiazolyl tetrasulfide, and the like. Content of the silane coupling agent relative to 100 parts by mass of the silica is preferably in a range from 2 parts by mass to 20 parts by mass, and more preferably in a range from 5 parts by mass to 15 parts by mass.

As the age resistor, examples include N-(1,3-dimethylbutyl)-N'-phenyl-p-phenylenediamine (6C), 2,2,4-trimethyl-1,2-dihydroquinoline polymer (TMDQ), 6-ethoxy-2,2,4-trimethyl-1,2-dihydroquinoline (AW), N,N'-diphenyl-p-phenylenediamine (DPPD), and the like. The content of the age resistor is not particularly limited. Relative to 100 parts by mass of the rubber component, the content of the age resistor is preferably in a range from 0.1 parts by mass to 5 parts by mass, and more preferably in a range from 1 part by mass to 4 parts by mass.

As the wax, examples include paraffin wax, microcrystalline wax, and the like. The content of the wax is not particularly limited. Relative to 100 parts by mass of the rubber component, the content of the wax is preferably in a range from 0.1 parts by mass to 5 parts by mass, and more preferably in a range from 1 part by mass to 4 parts by mass.

The content of the zinc oxide is not particularly limited. Relative to 100 parts by mass of the rubber component, the content of the zinc oxide is preferably in a range from 0.1 parts by mass to 10 parts by mass, and more preferably in a range from 1 part by mass to 8 parts by mass.

As the vulcanization accelerator, examples include sulfenamide vulcanization accelerators, guanidine vulcanization accelerators, thiazole vulcanization accelerators, thiuram vulcanization accelerators, dithiocarbamate vulcanization accelerators, and the like. One of these vulcanization accelerators may be used individually, or two or more of these vulcanization accelerators may be used in combination. The content of the vulcanization accelerator is not particularly limited. Relative to 100 parts by mass of the rubber component, the content of the vulcanization accelerator is preferably in a range from 0.1 parts by mass to 5 parts by mass, and more preferably in a range from 0.2 parts by mass to 4 parts by mass.

The vulcanizing agent is, for example, sulfur. The content of the vulcanizing agent, as sulfur, relative to 100 parts by mass of the rubber component, is preferably in a range from 0.1 parts by mass to 10.0 parts by mass and more preferably in a range from 1 part by mass to 4 parts by mass.

(Method of producing rubber composition)

The method of producing the rubber composition is not particularly limited. The rubber composition may be produced, for example, by mixing the rubber component, the resin component, and the filler with various components selected as appropriate, and then kneading, warming, extruding, and the like. Further, the resulting rubber composition may be vulcanized to produce vulcanized rubber.

Conditions of the kneading are not particularly limited. Various conditions such as feeding volume, rotor rotational velocity, ram pressure, and the like, as well as kneading temperature, kneading time, type of kneading equipment, and the like may be selected as appropriate. As kneading equipment, examples include Banbury® (Banbury is a registered trademark in Japan, other countries, or both) mixers, Intermix® (Intermix is a registered trademark in Japan, other countries, or both), kneaders, rolls, and the like that are normally used for kneading rubber compositions.

Conditions of the warming are not particularly limited. Various conditions such as warming temperature, warming time, warming equipment, and the like may be selected as appropriate. As the warming equipment, examples include warming roll machines typically used for warming of rubber compositions, and the like.

Conditions of the extruding are not particularly limited. Various conditions such as extrusion time, extrusion speed, extrusion equipment, extrusion temperature, and the like may be selected as appropriate. As extrusion equipment, examples include extruders typically used for extruding rubber compositions, and the like. Extrusion temperature may be determined as appropriate.

Equipment, method, conditions, and the like for performing the vulcanization are not particularly limited, and may be selected as appropriate. As equipment for vulcanization, examples include molding vulcanizers and other equipment typically used for vulcanizing rubber compositions. As a condition for vulcanization, temperature may be 100 °C to 190 °C, for example.

<Tread Rubber>

Tread rubber according to the present disclosure consists of the rubber composition for a tire described above. The tread rubber according to the present disclosure consists of the rubber composition for a tire described above, and therefore is able to improve tire wet gripping performance when applied to a tire.
The tread rubber according to the present disclosure may be applied to a new tire or a retreaded tire.

<Tire>

A tire according to the present disclosure includes the tread rubber described above. The tire according to the present disclosure includes the tread rubber described above, and therefore has excellent wet gripping performance.

In accordance with the type of tire intended for use, the tire according to the present disclosure may be obtained by first forming a tire using an unvulcanized rubber composition and then vulcanizing the tire, or by first forming a tire

using semi-vulcanized rubber yielded by a preliminary vulcanization process or the like and then fully vulcanizing the tire. The tire according to the present disclosure is preferably a pneumatic tire. The pneumatic tire may be filled with ordinary air or air with an adjusted partial pressure of oxygen, or may be filled with an inert gas such as nitrogen, argon, helium, or the like.

EXAMPLES

This disclosure is described in more detail below with reference to Examples. The present disclosure is not limited in any way by the Examples.

<Methods of analyzing rubber component>

Glass transition temperature (Tg) and the bound styrene content of synthesized modified SBR were measured by the following methods. Further, solubility parameter (SP) value of each rubber component was calculated according to the Fedors method.

(1) Glass transition temperature (Tg)

Using the synthesized modified styrene-butadiene rubber as a sample, a DSC curve was recorded using a DSC 250 produced by TA Instruments while increasing temperature from -100 °C at 20 °C/min under a helium circulation of 50 mL/min. The peak top (inflection point) of the DSC differential curve was used as the glass transition temperature.

(2) Bound styrene content

Using the synthesized modified styrene-butadiene rubber as a sample, 100 mg of the sample was diluted to 100 mL with chloroform and dissolved to obtain a measurement sample. The bound styrene content (mass%) relative to 100 mass% of the sample was measured based on the absorption of a phenyl group of styrene at the ultraviolet absorption wavelength (around 254 nm). A spectrophotometer "UV-2450" produced by Shimadzu Corporation was used as the measurement device.

<Methods of analyzing resin component>

Softening point and weight average molecular weight of the resin component were measured by the following methods. Further, solubility parameter (SP) value of the resin component was calculated according to the Fedors method.

(3) Softening point

Softening point of the resin component was measured in accordance with Japanese Industrial Standard JIS K 2207: 1996 (ball method).

(4) Weight average molecular weight

Average molecular weight of the resin component was measured by gel permeation chromatography (GPC) under the following conditions, and the polystyrene-equivalent weight average molecular weight was calculated.

- Column temperature: 40 °C
- Injection volume: 50 μL
- Carrier and flow rate: tetrahydrofuran 0.6 mL/min
- Sample preparation: dissolve approximately 2.5 mg of resin component in 10 mL of tetrahydrofuran

<Preparation of rubber compositions>

Rubber compositions of the Examples and Comparative Examples were prepared by mixing and kneading components according to the formulations listed in Table 1.

<Production and evaluation of vulcanized rubber>

Resulting rubber compositions of the Examples and Comparative Examples were vulcanized at 145 °C for 33

min to obtain vulcanized rubber test specimens. The vulcanized rubber obtained was subjected to measurement of loss tangent using atomic force microscopy and evaluation of wet gripping performance by the following methods.

(5) Loss tangent using atomic force microscopy

The measurement of loss tangent using atomic force microscopy was performed according to a method described in "Nanorheological Mapping of Rubbers by Atomic Force Microscopy", Macromolecules, 46, 1916- 1922 (2013). Specifically, each obtained vulcanized rubber of the Examples and Comparative Examples was cut into a section (vulcanized rubber test specimen) of approximately 100 μm × 100 μm in size and 2 μm in thickness at -80 °C to -100 °C using a cryomicrotome produced by Leica Microsystems, and the sections were adsorbed on a mica substrate. Loss tangent $\tan\delta_F$ at frequency F (Hz) was then measured while manipulating a cantilever, using an atomic force microscope (product name "MFP-3D", produced by Oxford Instruments). Conditions for the measurements were as follows:

- Measurement and analysis program: Oxford Instruments
- Probe: product name "OMCL-AC240FS-B2", produced by Olympus Corporation, tip radius: approx. 10 nm (typ.), spring constant: approx. 2 N/m (typ.)
- Surface temperature of measurement subject: 15 °C
- Measurement frequency F (Hz): 100 Hz to 20,000 Hz (12 points in total: 100, 200, 300, 500, 700, 1,000, 2,000, 3,000, 5,000, 7,000, 10,000, 20,000)

When measuring the loss tangent $\tan\delta_F$ at frequency F (Hz), the loss tangent was measured at 16 points in a two-dimensional space of 10 μm × 10 μm and the average value was obtained as $\tan\delta_F$. Then, using the values of frequency F (Hz) and $\tan\delta_F$, and the mass ratio R (component C/component A) of the component C to the component A in the rubber composition, "$-\log_{10} [\tan\delta_F/\{(\log_{10}F) \times R^3\}]$" was calculated for 12 points. In each case, the maximum and minimum values of the above calculations are listed in Table 1.

(6) Wet gripping performance

Coefficient of friction of vulcanized rubber test specimens against a wet asphalt road surface was measured using a portable friction tester. Evaluation results are expressed as an index relative to 100 as the coefficient of friction of Comparative Example 1. The higher the index value, the higher the coefficient of friction, indicating superior wet gripping performance.

[Table 1]

Table 1

| | | | Example 1 | Example 2 | Example 3 | Comparative Example 1 | Comparative Example 2 | Comparative Example 3 |
|---|---|---|---|---|---|---|---|---|
| Mix | Natural rubber *1 (SP value = 8.20, component A) | Parts by mass | 35.0 | 20.0 | 20.0 | 35.0 | 65.0 | 20.0 |
| | Modified SBR *2 (SP value = 8.65, component B) | | 65.0 | 80.0 | 80.0 | 65.0 | 35.0 | 80.0 |
| | Filler *3 | | 65.0 | 65.0 | 65.0 | 65.0 | 65.0 | 65.0 |
| | Resin component *4 (SP value = 8.35, component C) | | 30.0 | 30.0 | 40.0 | 15.0 | 30.0 | 50.0 |
| | Silane coupling agent *5 | | 6.5 | 6.5 | 6.5 | 6.5 | 6.5 | 6.5 |
| | Age resistor *6 | | 2.0 | 2.0 | 2.0 | 2.0 | 2.0 | 2.0 |
| | Wax *7 | | 2.0 | 2.0 | 2.0 | 2.0 | 2.0 | 2.0 |
| | Zinc oxide | | 2.0 | 2.0 | 2.0 | 2.0 | 2.0 | 2.0 |
| | Vulcanization accelerator A *8 | | 0.8 | 0.8 | 0.8 | 0.8 | 0.8 | 0.8 |
| | Vulcanization accelerator B *9 | | 1.7 | 1.7 | 1.7 | 1.7 | 1.7 | 1.7 |
| | Sulfur | | 1.4 | 1.4 | 1.4 | 1.4 | 1.4 | 1.4 |
| Mass ratio R of component C/component A | | - | 0.86 | 1.50 | 2.00 | 0.43 | 0.46 | 2.50 |
| Maximum calculated value (*10) (F (Hz) ≥ 100) | | - | 0.76 | 1.55 | 1.70 | -0.01 | 0.01 | 1.99 |
| Minimum calculated value (*10) (F (Hz) ≥ 100) | | - | 0.52 | 1.23 | 1.54 | -0.28 | -0.19 | 1.81 |

(continued)

| | | | Example 1 | Example 2 | Example 3 | Comparative Example 1 | Comparative Example 2 | Comparative Example 3 |
|---|---|---|---|---|---|---|---|---|
| Evaluation | Wet gripping performance | Index | 139 | 145 | 142 | 100 | 130 | 126 |

*1 Natural rubber: TSR #20, SP value = 8.20 $(cal/cm^3)^{1/2}$

*2 Modified SBR: hydrocarbyloxy silane compound-modified styrene-butadiene rubber synthesized by the following method, Tg = -65 °C, SP value = 8.65 $(cal/cm^3)^{1/2}$

*3 Filler: silica, product name "Nipsil® AQ" (Nipsil is a registered trademark in Japan, other countries, or both), produced by Tosoh Silica Corporation

*4 Resin component: hydrogenated Cs resin, product name "Impera® E1780" (Impera is a registered trademark in Japan, other countries, or both), produced by Eastman Chemical Company, softening point = 130 °C, weight average molecular weight (Mw) = 909 g/mol, SP value = 8.35 $(cal/cm^3)^{1/2}$

*5 Silane coupling agent: product name "Si75", produced by Evonik Japan Co., Ltd.

*6 Age resistor: product name "Nocrac 6C", produced by Ouchi Shinko Chemical Industrial Co., Ltd.

*7 Wax: product name "Ozoace 0701", produced by Nippon Seiro Co., Ltd.

*8 Vulcanization accelerator A: product name "Nocceler DM-P", produced by Ouchi Shinko Chemical Industrial Co., Ltd.

*9 Vulcanization accelerator B: product name "Sanceler NS-G", produced by Sanshin Chemical Industry Co., Ltd.

*10 Calculated value of -logic $[\tan\delta_F/\{(\log_{10}F) \times R^3\}]$

<Method of synthesis of modified SBR (*2)>

In an 800 mL pressure-resistant glass container that had been dried and purged with nitrogen, a cyclohexane solution of 1,3-butadiene and a cyclohexane solution of styrene were added to yield 67.5 g of 1,3-butadiene and 7.5 g of styrene. Then, 0.6 mmol of 2,2-di(tetrahydrofuryl)propane was added, and 0.8 mmol of n-butyllithium was added. Subsequently, the mixture was polymerized for 1.5 hours at 50 °C. Next, 0.72 mmol of N,N-bis(trimethylsilyl)-3-[diethoxy(methyl)silyl]propylamine was added as a modifier to the polymerization reaction system when the polymerization conversion ratio reached nearly 100 %, and a modification reaction was carried out for 30 minutes at 50 °C. Subsequently, the reaction was stopped by adding 2 mL of an isopropanol solution containing 5 mass% of 2,6-di-t-butyl-p-cresol (BHT), and the result was dried by a usual method to obtain a modified SBR.
The microstructure of the resulting modified SBR was measured, the bound styrene content was 10 mass%, and the glass transition temperature (Tg) was -65 °C.
Table 1 indicates that the rubber compositions according to the Examples have excellent wet gripping performance. On the other hand, the rubber compositions of the Comparative Examples do not satisfy Formula (a) (that is, the minimum calculated value is less than 0.30 and/or the maximum calculated value is greater than 1.80), indicating inferior wet gripping performance.

INDUSTRIAL APPLICABILITY

The present disclosure provides a rubber composition for a tire able to improve tire wet gripping performance, and tread rubber consisting of the rubber composition.
Further, the present disclosure provides a tire having excellent wet gripping performance.

## Claims

1. A rubber composition for a tire comprises a diene rubber component A, a diene rubber component B, and a resin component C, wherein

    a difference in SP values between the diene rubber component A and the diene rubber component B is 0.25 $(cal/cm^3)^{1/2}$ or more,
    a difference in SP values between the resin component C and the diene rubber component A is 1.40 $(cal/cm^3)^{1/2}$ or less,
    a mass ratio R of the resin component C to the diene rubber component A is 0.5 or more, and
    the following Formula (a) is satisfied for F ≥ 100:

$$0.30 \leq -\log_{10} [\tan\delta_F/\{(\log_{10}F) \times R^3\}] \leq 1.80 \qquad \ldots (a)$$

    where $\tan\delta_F$ is loss tangent at frequency F (Hz), measured by atomic force microscopy.

2. The rubber composition for a tire according to claim 1, wherein the difference in SP values between the resin component C and the diene rubber component A is 0.50 $(cal/cm^3)^{1/2}$ or less.

3. The rubber composition for a tire according to claim 1 or 2, wherein the difference in SP value between the diene rubber component B and the diene rubber component A is 0.30 $(cal/cm^3)^{1/2}$ or more.

4. The rubber composition for a tire according to any one of claims 1 to 3, wherein the content of the diene rubber component A is 10 parts by mass or more and 50 parts by mass or less per 100 parts by mass of the rubber component.

5. The rubber composition for a tire according to any one of claims 1 to 4, wherein the diene rubber component A is natural rubber or isoprene rubber.

6. The rubber composition for a tire according to any one of claims 1 to 5, wherein the diene rubber component B is butadiene rubber or styrene-butadiene rubber.

7. The rubber composition for a tire according to any one of claims 1 to 6, wherein the resin component C has a softening point of more than 110 °C and a polystyrene-equivalent weight average molecular weight of 200 g/mol to

1,600 g/mol.

8. The rubber composition for a tire according to any one of claims 1 to 7, wherein the resin component C is a hydrogenated resin.

9. The rubber composition for a tire according to any one of claims 1 to 8, wherein the content of the resin component C is 20 parts by mass or more and 50 parts by mass or less, relative to 100 parts by mass of the rubber component.

10. The rubber composition for a tire according to claim 8 or 9, wherein the resin component C is at least one selected from the group consisting of hydrogenated Cs resins, hydrogenated $C_5/C_9$ resins, hydrogenated dicyclopentadiene resins, and hydrogenated terpene resins.

11. Tread rubber consisting of the rubber composition for a tire according to any one of claims 1 to 10.

12. A tire comprising the tread rubber according to claim 11.

**INTERNATIONAL SEARCH REPORT**

International application No.
**PCT/JP2022/016940**

**A. CLASSIFICATION OF SUBJECT MATTER**

***C08L 9/00***(2006.01)i; ***B60C 1/00***(2006.01)i; ***C08F 236/10***(2006.01)i; ***C08L 7/00***(2006.01)i; ***C08L 9/06***(2006.01)i; ***C08L 101/00***(2006.01)i
FI: C08L9/00; C08L101/00; C08L7/00; C08L9/06; C08F236/10; B60C1/00 A

According to International Patent Classification (IPC) or to both national classification and IPC

**B. FIELDS SEARCHED**

Minimum documentation searched (classification system followed by classification symbols)

C08K3/00-13/08; C08L1/00-101/14; B60C1/00-19/12; C08C19/00-19/44; C08F6/00-246/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2017/209261 A1 (BRIDGESTONE CORPORATION) 07 December 2017 (2017-12-07) claims, paragraphs [0005], [0021], [0031]-[0033], example 7 | 1-7, 9, 11-12<br>8, 10 |
| X<br>Y | JP 2019-108515 A (BRIDGESTONE CORPORATION) 04 July 2019 (2019-07-04) claims, paragraphs [0009], [0020], [0098], [0113], example 3 | 1-7, 9, 11-12<br>8, 10 |
| X | JP 2017-203111 A (SUMITOMO RUBBER INDUSTRIES, LTD) 16 November 2017 (2017-11-16) claims, paragraphs [0027], [0029], [0032], example 8 | 1-12 |
| Y | JP 2011-099026 A (BRIDGESTONE CORPORATION) 19 May 2011 (2011-05-19) claims, paragraph [0066] | 8, 10 |
| Y | JP 2011-088988 A (BRIDGESTONE CORPORATION) 06 May 2011 (2011-05-06) claims, paragraph [0030] | 8, 10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 June 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/016940**

**C. DOCUMENTS CONSIDERED TO BE RELEVANT**

| Category* | Citation of document, with indication, where appropriate, of the relevant passages | Relevant to claim No. |
|---|---|---|
| Y | JP 2011-088998 A (BRIDGESTONE CORPORATION) 06 May 2011 (2011-05-06) claims, paragraph [0021] | 8, 10 |
| A | WO 2017/209263 A1 (BRIDGESTONE CORPORATION) 07 December 2017 (2017-12-07) entire text | 1-12 |
| A | WO 2017/209262 A1 (BRIDGESTONE CORPORATION) 07 December 2017 (2017-12-07) entire text | 1-12 |
| A | JP 2019-194289 A (SUMITOMO RUBBER INDUSTRIES, LTD) 07 November 2019 (2019-11-07) entire text | 1-12 |
| A | JP 2011-094012 A (SUMITOMO RUBBER INDUSTRIES, LTD) 12 May 2011 (2011-05-12) entire text | 1-12 |
| A | JP 2013-227375 A (THE YOKOHAMA RUBBER CO., LTD.) 07 November 2013 (2013-11-07) entire text | 1-12 |
| A | JP 2020-527185 A (LG CHEM, LTD) 03 September 2020 (2020-09-03) entire text | 1-12 |

Form PCT/ISA/210 (second sheet) (January 2015)

**INTERNATIONAL SEARCH REPORT**
**Information on patent family members**

International application No.
**PCT/JP2022/016940**

| Patent document cited in search report | Publication date (day/month/year) | Patent family member(s) | Publication date (day/month/year) |
|---|---|---|---|
| WO 2017/209261 A1 | 07 December 2017 | US 2020/0181369 A1<br>claims, paragraphs [0007]-[0008], [0031], [0048]-[0050], example 7<br>EP 3467020 A1<br>CN 109153824 A | |
| JP 2019-108515 A | 04 July 2019 | US 2019/0185642 A1<br>claims, paragraphs [0012], [0040], [0149], [0181]-[0183], example 3<br>EP 3725837 A1<br>CN 111479865 A | |
| JP 2017-203111 A | 16 November 2017 | US 2019/0176520 A1<br>claims, paragraphs [0028]-[0030], [0033], example 8<br>EP 3434722 A1<br>CN 109071883 A | |
| JP 2011-099026 A | 19 May 2011 | (Family: none) | |
| JP 2011-088988 A | 06 May 2011 | (Family: none) | |
| JP 2011-088998 A | 06 May 2011 | (Family: none) | |
| WO 2017/209263 A1 | 07 December 2017 | US 2020/0181368 A1<br>entire text<br>EP 3467017 A1<br>CN 109196037 A | |
| WO 2017/209262 A1 | 07 December 2017 | US 2019/0194427 A1<br>entire text<br>EP 3467018 A1 | |
| JP 2019-194289 A | 07 November 2019 | (Family: none) | |
| JP 2011-094012 A | 12 May 2011 | (Family: none) | |
| JP 2013-227375 A | 07 November 2013 | US 2015/0148447 A1<br>entire text<br>CN 104245817 A<br>KR 10-2014-0130568 A | |
| JP 2020-527185 A | 03 September 2020 | US 2020/0123365 A1<br>entire text<br>EP 3632976 A1<br>KR 10-2019-0131833 A<br>CN 110869434 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015079703 A
- WO 2003046020 A
- JP 2007217562 A


### Non-patent literature cited in the description


- Nanorheological Mapping of Rubbers by Atomic Force Microscopy. *Macromolecules,* 2013, vol. 46, 1916-1922
- **R. R. HAMPTON.** *Analytical Chemistry,* 1949, vol. 21, 923